# EUROPÄISCHE PATENTANMELDUNG

(11) **EP 2 194 338 A2**
(43) Veröffentlichungstag der Anmeldung: **09.06.2010**
(21) Anmeldenummer: 09177943.9
(22) Anmeldetag: 03.12.2009
(51) Int. Cl.: F24J 2/52, E04D 3/36, E04D 12/00, E04D 3/361

(54) **Dachsanierung**

(30) Priorität: 05.12.2008 DE 102008044380; 15.05.2009 DE 102009003166
(71) Anmelder: Climasol-Solaranlagen GmbH, 89073 Ulm (DE)
(72) Erfinder: Lutz, Stefan, 89075 Ulm (DE)
(74) Vertreter: Lermer, Christoph

(57) **Zusammenfassung**

Ein Verfahren zur Sanierung eines Flachdachs im Rahmen der Montage von Solarmodulen mittels eines Montagesystems 10 umfasst folgende Schritte: a) Befestigen wenigstens eines Trägerelements 11 auf der Dachfolie 21 eines Flachdachs; b) Anordnen eines Systemdichtelements 13 auf der Dachfolie 21 und über dem wenigstens einen Trägerelement 11 derart, dass wenigstens ein Abschnitt des Trägerelements 11 abgedeckt ist; und c) Befestigen des Systemdichtelements 13 an der Dachfolie 21. Eine so aufgebaute Flachdachkonstruktion mit einer daran befestigten Solarmodulanordnung umfasst a) ein Flachdach mit einer daran angeordneten ersten Dachfolie 21; b) wenigstens ein auf der ersten Dachfolie 21 angeordnetes und mit dem Flachdach verbundenes Trägerelement 11; und c) eine mit der ersten Dachfolie 21 verbundene zweite Dachfolie 13, die oberhalb der ersten Dachfolie 2) und oberhalb des Trägerelements 11 angeordnet ist.

## Beschreibung

### GEBIET DER ERFINDUNG

Die vorliegende Erfindung betrifft ein Verfahren zur Sanierung eines Flachdachs im Rahmen der Montage von Solarmodulen mittels eines Montagesystems. Außerdem betrifft die Erfindung eine Flachdachkonstruktion mit einer daran befestigten Solarmodulanordnung.

### STAND DER TECHNIK

Der Einsatz von Solarmodulen zur Stromerzeugung hat im Angesicht steigender Energiepreise und knapper werdender nicht erneuerbarer Ressourcen an Bedeutung gewonnen. Um Solarmodule wirtschaftlich rentabel zu betreiben, wurden erhebliche Anstrengungen unternommen, die Rentabilität der Herstellung und den Wirkungsgrad der Module zu verbessern.

Für einen wirtschaftlichen Einsatz ist es jedoch erforderlich, dass die Solarmodule mit möglichst geringem technischem Aufwand an geeigneten Stellen aufgebaut und dort effektiv genutzt werden können. Bekanntermaßen werden Solarmodule häufig an Dächern angebracht, da dort die Sonneneinstrahlung ungehindert auf die Solarzelle auftreffen kann.

Insbesondere bei Anbringen von Solarmodulen auf Flachdächern führt dies jedoch zu Problemen, da Flachdächer meist durch besondere Maßnahmen, wie zum Beispiel dem Anbringen von wasserdichten Dachfolien, vor dem Eindringen von Feuchtigkeit geschützt sind. Beim Befestigen der Solarmodule kann der Feuchtigkeitsschutz leicht zerstört und das unerwünschte Eindringen von Wasser in die Dachstruktur gefördert werden.

Da dies nicht akzeptabel ist, werden beispielsweise beim Anschrauben von Haltevorrichtungen am Flachdach Dichtringe eingesetzt, die die Durchbrüche für die Schrauben am Flachdach abdichten sollen. Da jedoch in der Regel eine Vielzahl von Schraubverbindungen und entsprechenden Durchbrüchen vorgesehen ist, ist der Aufwand bei der Montage hoch. Bei unsauberem Arbeiten ist die Abdichtung unzureichend. Demnach ist die Montage stets aufwändig und teuer.

Darüber kann es bereits weit vor dem Ablauf der Lebensdauer der Solarmodule notwendig werden, die gesamte Konstruktion wieder abzubauen, da das Flachdach mittlerweile sanierungsbedürftig geworden ist.

### AUFGABE DER ERFINDUNG

Ausgehend davon ist es die Aufgabe der vorliegenden Erfindung, Verfahren zur Sanierung eines Flachdachs sowie Flachdachkonstruktionen bereitzustellen, die den Aufwand an Montage und Demontage der Solarmodule während ihrer Lebensdauer verringern, und ein Eindringen von Feuchtigkeit in das Flachdach zuverlässig verhindern.

### TECHNISCHE LÖSUNG

Diese Aufgabe wird gelöst durch Bereitstellung von Verfahren zur Sanierung eines Flachdachs nach Anspruch 1 oder 13, und durch Flachdachkonstruktionen nach Anspruch 15 Bevorzugte Ausführungsformen der Erfindung ergeben sich aus den Merkmalen der abhängigen Ansprüche.

Ein erfindungsgemäßes Verfahren zur Sanierung eines Flachdachs im Rahmen der Montage von Solarmodulen mittels eines Montagesystems umfasst folgende Schritte: a) Befestigen wenigstens eines Trägerelements auf der Dachabdeckung eines Flachdachs; b) Anordnen eines Systemdichtelements auf der Dachfabdeckung und über dem wenigstens einen Trägerelement derart, dass wenigstens ein Abschnitt des Trägerelements abgedeckt ist; und c) Befestigen des Systemdichtelements am Dach. Das Systemdichtelement ist eine wasserdichte Folie, die als eine zweite Dachfolie (oberhalb der Dachabdeckung, die ebenfalls meist eine erste Dachfolie ist) wirkt. Es bedeckt einerseits die erste Dachabdeckung, die unter Umständen sanierungsbedürftig ist oder deren Sanierung zu einem früheren Zeitpunkt anstünde, wenn sie nicht während des Aufbaus der Solarmodule am Dach (evtl. vorsorglich) saniert würde.

Das Verfahren dient jedoch nicht nur der Sanierung des Dachs. Vielmehr kann, praktisch als Synergieeffekt, die Grundlage für einen raschen, sicheren und zuverlässigen Aufbau der Solaranlage geschaffen werden, indem die Trägerelemente (Bohlen aus Holz oder andren Materialien wie Aluminium) unterhalb der zweiten Dachfolie angeordnet werden. So wird ein Eindringen von Feuchtigkeit durch die erste, bereits vorhandene Dachfolie, verhindert. beim Aufbau muss zudem, insbesondere beim befestigen der Bohlen an der Dachunterkonstruktion, weniger Rücksicht auf die Unversehrtheit der vorhandenen Dachfolie genommen werden. Im Verfahrensschritt a) kann eine Vielzahl von Trägerelementen befestigt werden, die im Verfahrensschritt b) vom Systemdichtelement abgedeckt werden.

Da mit dem Verfahren eine völlig neue Dachfolie zur Verfügung gestellt wird, ist es darüber hinaus unwahrscheinlich, dass ein Sanierungsfall in naher Zukunft ansteht. Damit wird der Aufwand an Montage und Demontage der Solarmodule während ihrer Lebensdauer verringert und ein Eindringen von Feuchtigkeit in das Flachdach zuverlässig verhindert.

Im Schritt a) kann zudem, falls erforderlich, eine zusätzliche Dämmung z.B. in Form von Glaswolleelementen auf die Dachabdeckung aufgebracht werden, bevor das Systemelement diese Dämmung sowie das Trägerelement abdeckt und befestigt wird.

Das bzw. die Trägerelemente im Verfahrensschritt a) werden vorzugsweise auf der Dachabdeckung mittels Befestigungselementen befestigt, wobei die Befestigungselemente eine Verbindung zur Unterkonstruktion des Dachs herstellen.

Vorzugsweise wird das Systemdichtelement im Verfahrensschritt c) mit der Dachabdeckung verbunden, z.B.verschweißt und/oder verklebt, jedenfalls aber wasserdicht mit dieser verbunden.

Das Systemdichtelement wird insbesondere als eine zusätzliche Dachfolie bereitgestellt. Damit wird eine Sanierung mit hoher Wahrscheinlichkeit später fällig als bei üblichen Montagemethoden für Solarmodule. Das Systemdichtelement kann wie eine Dachfolie einteilig ausgebildet oder aus mehreren Folienbahnen zusammengesetzt sein. Die Folienfläche ist durch das Unterlegen der Bohlen unter die Folie theoretisch etwas größer als die der vorhandenen Dachfolie.

Es kann eines oder mehrere Systemdichtelemente vorgesehen sein, die die gesamte Oberfläche der Dachfolie wasserdicht abdecken. Die vorhandene Dachfolie ist somit im besten Fall von einer darüber liegenden Folie abgedeckt. Feuchtigkeit kann damit im besten Fall gar nicht bis zur ersten Dachfolie vordringen, da Öffnungen im Systemdichtelement entweder gezielt abgedichtet werden und/oder nur an durch die Trägerelemente erhöhten Stellen in der Folie vorgesehen werden.

Das Verfahren kann wenigstens einen weiteren Verfahrensschritt umfassen: d) Befestigung wenigstens eines Halteelements am vom Systemdichtelement abgedeckten Trägerelement. Die Befestigung erfolgt an einer erhöhten Stelle, wodurch das Eindringen von Feuchtigkeit erschwert wird. Das Halteelement kann beispielsweise formschlüssig, z.B. durch Anklammern, mit dem Trägerelement verbunden werden.

Das Verfahren kann wenigstens einen weiteren Verfahrensschritt umfassen: e) Befestigung wenigstens eines Solarmoduls am vom Systemdichtelement abgedeckten Trägerelement und/oder am Halteelement. Auch das Solarmodul wird an einer erhöhten Stelle befestigt.

Im Verfahrensschritt b) wird insbesondere wenigstens ein Längsabschnitt des Trägerelements vollständig abgedeckt. Das Systemdichtelement erstreckt sich von einer Seite der Bohle zur anderen über den Längsabschnitt der Bohle hinweg.

Das Verfahren kann wenigstens einen weiteren Verfahrensschritt umfassen: f) Anordnen eines Halteprofils am Trägerelement.

Bei Verwendung von zwei oder mehreren benachbart angeordneten Systemdichtelementen können die benachbarten Enden aneinandergrenzender Systemdichtelemente jeweils in einen oberhalb der wasserführenden Ebene der Dachabdeckung liegenden Bereich geführt sein.

Vorzugsweise können bei Verwendung von zwei oder mehreren benachbart angeordneten Systemdichtelementen die benachbarten Enden aneinandergrenzende Systemdichtelemente jeweils in einem oberhalb der wasserführenden Ebene der Dachabdeckung liegenden Bereich eine Trägerelements liegen. Damit wird ein Eindringen von Wasser an den Endbereichen der zweiten Dachfolien verhindert.

Die Randbereiche aneinandergrenzender Systemdichtelemente sind insbesondere miteinander verbunden, insbesondere an einer Oberseite des Trägerelements.

Ein weiteres erfindungsgemäßes Verfahren zur Sanierung eines Flachdachs im Rahmen der Montage von Solarmodulen mittels eines Montagesystems umfasst folgende Schritte: a) Bestimmung der gewünschten Anordnung von Trägerelementen (11) auf einer sanierungsbedürftigen Dachabdeckung (21) und Anordnung der Trägerelemente (11) auf der Dachabdeckung (21); und b) Anordnen wenigstens eines Systemdichtelements (13) auf der Dachabdeckung (21) zum Abdecken wenigstens eines Teilbereichs der Dachabdeckung (21), wobei der wenigstens eine abgedeckte Teilbereich einen Zwischenbereich zwischen den gewünschten Positionen wenigstens zweier Trägerelemente umfasst.

Der Verfahrensschritt a) umfasst insbesondere ein Anordnen und/oder Befestigen der Trägerelemente auf der Dachfolie, z.B. mittels Befestigungsschrauben.

Das Systemdichtelement kann so angeordnet werden, dass es mit dem Bereich bzw. den Bereichen der gewünschten Positionen des bzw. der Trägerelemente überlappt. Dies bedeutet, dass das freie Ende des Systemdichtelements nicht vor oder an der Seitenwand der Bohle abschließt, sondern an die Bohle heranreicht, so dass das Ende an der Seitenwand der Bohle nach oben und/oder auf die Oberseite der Bohle hinauf geführt werden kann. Dort kann etwa eine Befestigung zwischen Folie und Bohle hergestellt werden.

Vorzugsweise überlappen sich die Endbereiche zweier beidseitig des Trägerelements angeordneter Systemdichtelemente nicht.

Alternativ dazu können sich die Endbereiche zweier beidseitig des Trägerelements angeordneter Systemdichtelemente überlappen.

Wenigstens einer der Endbereiche zweier beidseitig des Trägerelements angeordneter Systemdichtelemente können über die Oberseite des Trägerelements hinaus ragen. Der Endbereich des anderen Systemdichtelements kann darunter liegen, so dass sich ein sicherer Verschluss zwischen den Systemdichtelementen ergibt.

Die Endbereiche der Systemdichtelemente werden insbesondere miteinander verbunden, z.B. verschweißt oder verklebt, vorzugsweise wasserdicht.

Das bzw. die Trägerelemente können im Verfahrensschritt a) auf der Dachfolie mittels Befestigungselementen befestigt werden, wobei die Befestigungselemente eine Verbindung zur Unterkonstruktion des Dachs herstellen.

Im Verfahrensschritt a) kann eine Vielzahl von Trägerelementen beabstandet voneinander angeordnet werden, deren Zwischenbereiche im Verfahrensschritt b) vom Systemdichtelement abgedeckt werden.

Das Systemdichtelement kann im Verfahrensschritt b) an der Dachfolie befestigt werden.

Insbesondere kann das Systemdichtelement im Verfahrensschritt b) im Zwischenbereich zwischen zwei Bohlen an der Dachfolie befestigt werden.

Das Systemdichtelement kann im Verfahrensschritt b) mit der Dachfolie verschweißt werden. Dies kann, da die langgestreckten Bohlen nebeneinander und beabstandet angeordnet sind, maschinell zwischen jeweils zwei Bohlen erfolgen.

Das Systemdichtelement wird insbesondere als eine zusätzliche Dachfolie bereitgestellt. Diese zusätzliche Dachfolie ist zwar an den Stellen, an denen die Trägerelemente liegen, unterbrochen. Jedoch sind die Folienbahnen so ausgelegt, dass sie den Zwischenraum zwischen jeweils zwei Bohlen abdecken und beidseitig an den Seitenwänden der Bohlen nach oben geführt sind oder über die Bohlen hinaus ragen, so dass Feuchtigkeit nicht zwischen die untere Dachfolie und die Bohle eindringen kann.

Eines oder mehrere Systemdichtelemente und die Trägerelemente decken insbesondere die gesamte Oberfläche der Dachfolie wasserdicht ab.

Die Endbereiche zweier beidseitig des Trägerelements angeordneter Systemdichtelemente können an der Seitenwand und/oder an der Oberfläche des Trägerelements befestigt werden.

Das Verfahren kann wenigstens einen weiteren Verfahrensschritt umfassen: c) Befestigung wenigstens eines Halteelements am Trägerelement.

Das Verfahren wenigstens einen weiteren Verfahrensschritt umfassen: d) Befestigung wenigstens eines Solarmoduls am vom Systemdichtelement abgedeckten Trägerelement und/oder am Halteelement.

Das Verfahren wenigstens einen weiteren Verfahrensschritt umfassen: e) Befestigung wenigstens eines Solarmoduls am vom Systemdichtelement abgedeckten Trägerelement und/oder am Halteelement.

Im Verfahrensschritt b) werden vorzugsweise die Zwischenbereiche zwischen den Trägerelementen vollständig abgedeckt.

Das Verfahren kann wenigstens einen weiteren Verfahrensschritt umfassen: f) Anordnen eines Halteprofils am Trägerelement. Das Halteprofil kann auch als Abdeckprofil, Klemmprofil o. ä. bezeichnet werden und beliebig ausgebildet sein.

Eine erfindungsgemäße Flachdachkonstruktion mit einer daran befestigten Solarmodulanordnung umfasst: a) ein Flachdach mit einer daran angeordneten ersten Dachfolie; b) wenigstens ein auf der ersten Dachfolie angeordnetes und mit dem Flachdach verbundenes Trägerelement; und c) eine mit der ersten Dachfolie verbundene zweite Dachfolie, die oberhalb der ersten Dachfolie und oberhalb des Trägerelements angeordnet ist.

Die zweite Dachfolie deckt vorzugsweise die gesamte Oberfläche der ersten Dachfolie wasserdicht ab.

Die Flachdachkonstruktion kann wenigstens ein Halteelement aufweisen, das an der dem Trägerelement abgewandten Seite der zweiten Dachfolie angeordnet ist. Das Halteelement ist insbesondere mit dem Trägerelement verbunden. Damit ist das Halteelement an der Oberseite oder (in genügender Höhe) an der Seitenwand der Bohle befestigt. Eine Öffnung in der Folie für die Befestigung des Halteelements an der Bohle ist demnach erhöht angeordnet und somit für Flüssigkeiten schwer erreichbar.

Die Flachdachkonstruktion weist insbesondere wenigstens ein Solarmodul auf, das an der dem Trägerelement abgewandten Seite der zweiten Dachfolie angeordnet ist. Das Solarmodul kann mit dem Halteelement verbunden sein.

Die Flachdachkonstruktion kann zudem wenigstens ein Profil aufweisen, das am Trägerelement befestigt ist bzw. das Trägerelement kann als Profilschiene ausgebildet sein. Das Halteelement kann ein komplementäres Profil ausgebildet sein, do dass eine formschlüssige Verbindung zwischen den Elementen hergestellt werden kann.

Das Profil hält vorzugsweise die zweite Dachfolie am Trägerelement fest. Dies kann durch eine Klemmbefestigung oder ein Aufliegen des Profils auf einer Folie oder einem Folienende bewerkstelligt werden. Zum Klemmen kann das Profil geeignete Kanten oder Klammern aufweisen.

Eine weitere erfindungsgemäße Flachdachkonstruktion mit einer daran befestigten Solarmodulanordnung umfasst: a) ein Flachdach mit einer daran angeordneten ersten Dachfolie; b) wenigstens ein auf der ersten Dachfolie angeordnetes und mit dem Flachdach verbundenes Trägerelement; und c) eine mit der ersten Dachfolie verbundene zweite Dachfolie, die oberhalb der ersten Dachfolie angeordnet ist und das Trägerelement wenigstens teilweise umschließt.

Die zweite Dachfolie kann wenigstens zwei beidseitig des Trägerelements angeordnete Folienstücke aufweisen. Die Folienstücke können jeweils einen Endbereich aufweisen, der sich über einen Bereich der Seitenwand und/oder der Oberseite des Trägerelements erstreckt. Die Endbereiche zweier beidseitig des Trägerelements angeordneter Folienstücke können sich überlappen, oder sie können sich nicht überlappen.

Wenigstens einer der Endbereiche zweier beidseitig des Trägerelements angeordneter Folienstücke kann über die Oberseite des Trägerelements hinaus ragen. Dies bedeutet, dass sich der Endbereich über die Seitenwand der Folie hinauf erstreckt, weiter von der ersten Seitenkante der Oberfläche über die Oberfläche bis zur zweiten Seitenkante der Oberfläche und darüber hinaus.

Die Endbereiche der Folienstücke sind vorzugsweise miteinander verbunden, z.B. verschweißt oder geklebt, insbesondere wasserdicht.

Die Flachdachkonstruktion kann eine Vielzahl von Trägerelementen aufweisen, die beabstandet voneinander angeordnet sind, und deren Zwischenbereich von wenigstens einem der Folienstücke abgedeckt ist.

Die erste Dachfolie und die zweite Dachfolie können im Zwischenbereich aneinander befestigt sein.

Die Endbereiche zweier beidseitig des Trägerelements angeordneter Folienstücke sind insbesondere an der Seitenwand und/oder an der Oberfläche des Trägerelements befestigt.

Die Folienstücke und die Trägerelemente können vorzugsweise die gesamte Oberfläche der Dachfolie wasserdicht abdecken. Die Folienstücke decken insbesondere die Zwischenbereiche zwischen den Trägerelementen vollständig ab.

Die Flachdachkonstruktion kann insbesondere eine Vielzahl von Trägerelementen aufweisen.

Die erste Dachfolie und die zweite Dachfolie können miteinander verbunden, insbesondere miteinander verschweißt sein.

Zwischen der ersten Dachfolie und der zweiten Dachfolie kann eine zusätzliche Wärmedämmung angeordnet sein.

Die Flachdachkonstruktion weist vorzugsweise wenigstens ein Halteelement zum Halten eines Solarmoduls auf. Das Halteelement kann mit dem Trägerelement verbunden sein. Die Flachdachkonstruktion weist insbesondere wenigstens ein Solarmodul auf, das am Trägerelement angeordnet ist. In einer bevorzugten Ausführungsform der Erfindung ist das Solarmodul mit dem Halteelement verbunden.

Die Flachdachkonstruktion kann Befestigungselemente zur Befestigung des bzw. der Trägerelemente am Flachdach aufweisen, insbesondere Befestigungsschrauben.

Die Befestigungselemente können sich durch die erste Dachfolie zur Unterkonstruktion des Flachdachs erstrecken. Insbesondere können sie dabei von der zweiten Dachfolie umschlossen sein.

Ein in den Verfahren verwendetes und in den Flachdachkonstruktionen integriertes Montagesystem zur Montage von Solarmodulen auf der Dachfolie eines Dachs, insbesondere eines Flachdachs, umfasst: ein Trägerelement, das auf der Dachfolie angeordnet und am Flachdach befestigt ist; wenigstens ein Befestigungselement zum Befestigen eines Solarmoduls am Trägerelement; und wenigstens ein Systemdichtelement. Die Dachfolie und das Systemdichtelement sind über wenigstens eine Verbindungsnaht derart verbunden, dass ein Eindringen von Wasser von der Oberfläche der Dachfolie in den Bereich zwischen dem Trägerelement und der Dachfolie verhindert wird.

Die Trägerelemente sind in der Regel als längliche, quaderförmige Planken bzw. Bohlen bereitgestellt. Die Bohlen werden abschnittsweise, vorzugsweise quer zum Profil, beispielsweise zu einem Trapez- oder Wellenprofil, des Flachdaches angebracht. Dies bedeutet, dass die Bohlen vorzugsweise entlang eines Vorsprunges, oder auch entlang einer Vertiefung im Flachdachprofil befestigt werden. Insbesondere bezieht sich die vorliegende Erfindung auf das Anbringen von Solarmodulen auf Flachdächern mit einer Dachfolie. Die Solarmodule werden vorzugsweise oberhalb der Dachfolie angebracht. Unter der Dachfolie befindet sich weiches Material, z.B. Dämmstoffmaterial. Daher muss die Last der Bohle verteilt werden. Dies bedeutet, dass sich die Bohle mindestens über zwei, insbesondere über eine Vielzahl von Vorsprüngen des trapezförmigen Dachs erstrecken muss. Einzelne punktförmige Befestigungen sind dagegen für die Montage von Solarmodulen weniger gut geeignet, da Schub- uns Zugkräfte, besonders letztere, die auf eine Montageeinrichtung für Solarmodule wirken, die oberhalb einer Dachfolie, evtl. mit einem weichen Untergrund, angebracht ist, gut über die Länge einer Bohle verteilt werden müssen.

Um für den Einsatz auf einem Trapezblech geeignet zu sein, müssen die Bohlen durchgängig ausgebildet sein und eine relativ große Auflagefläche bilden. Bei punktförmigen Auflagen kann die unter der Dachfolie liegende Isolierung zerbrechen.

Außerdem ergibt sich bei langen, durchgehend angeordneten Bohlen der Vorteil, dass Systemdichtelemente lediglich linienförmig verschweißt werden müssen. Dies erlaubt den Einsatz von Schweißrobotern.

Das Trägerelement ist beispielsweise auf die Oberfläche einer Dachfolie an das Flachdach aufgeschraubt. Statt Holzbohlen können auch Trägerelemente aus anderen Materialien, z.B. Profilschienen, beispielsweise aus Aluminium, mit beliebigem Querschnitt verwendet werden. Durch das Trägerelement und dessen Befestigung werden eine linienförmige Lastverteilung und ein stabiles Anbringen der Solarmodule gewährleistet. Das Trägerelement kann bei der Montage des Systems am Dach beispielsweise in dem Systemdichtelement eingeschweißt werden. Das Trägerelement kann jedoch auch vorkonfektioniert mit einem Systemdichtelement versehen an den Montageort angeliefert und dort montiert werden. Außer dem Systemdichtelement können auch Befestigungsmittel, z.B. Schrauben, bereits vor der Montage am Dach am Trägerelement angeordnet sein.

Das Verschweißen kann manuell, vorzugsweise aber auch maschinell erfolgen, da lediglich geradlinige, sich über eine relativ große Länge erstreckende Schweißnähte gebildet werden müssen.

Das Systemdichtelement im Sinne der Erfindung ist ein flächiges Element, das einen Träger wenigstens teilweise umhüllen kann und ein Durchdringen von Feuchtigkeit zur Dachstruktur hin verhindert. So kann eine Folie aus Kunststoff vorgesehen sein. Das Systemdichtelement kann jedoch auch aus Textilmaterialien, Matten, bituminösen Bahnen, mit Metall beschichteten Werkstoffen, o.ä., bestehen, soweit diese das Eindringen von Wasser in den Spalt zwischen dem Trägerelement und der Dachfolie wasserdicht abdichten können und an einer Dachabdeckung (z.B. einer Dachfolie) befestigtbar sind. Das Systemdichtelement kann an der Dachfolie befestigt und an der Bohle wenigstens abschnittsweise anliegend hoch geführt sein, insbesondere beidseitig der Bohle. So bildet das Systemdichtelement eine Barriere zwischen beiden Seiten der Befestigungsnaht (Befestigungslinie).

Mit Hilfe der Erfindung kann ohne großen Aufwand ein wasserdichtes System, bestehend aus der Dachfolie und der wasserdichten Folie, bereitgestellt werden. Die Trägerelemente können in dem System aus Dachfolie und der wasserdichten Folie (dem Systemdichtsystem) eingeschweißt sein. Ohne weiteres können damit weitere Befestigungen wie Schrauben, Nägel, etc., in das Trägerelement eingebracht werden, ohne dass durch diesen Eingriff das System zur Dachkonstruktion hin feuchtigkeitsdurchlässig wird. Das Systemdichtelement kann mit der Dachfolie verschweißt sein, so dass das Systemdichtelement das Trägerelement unter einer gewissen Spannung wenigstens teilweise umschließt. Gegenüber dem Anbringen von Dichtungen an einzelnen Verbindungsschrauben verhindert das System nicht nur zuverlässig das Eindringen von Wasser in die Dachstruktur, sondern erleichtert auch die Montage erheblich. Beispielsweise ist kein aufwändiges Öffnen des Dachs, Verankern der Modulunterkonstruktion, etc. nötig. Dies führt zu Zeit- und Kostenersparnissen bei der Montage. Das Montagesystem ist damit auch für das Solarmodule mit geringerem Flächennutzungsgrad (nicht- kristalline Module) vorteilhaft.

Die Handhabung des Systems ist, bei geringer Belastung für das Dach, insgesamt einfach. Insbesondere im Zusammenspiel mit dem Einsatz von Dünnfilm-Modulen kann eine Bauweise mit wenig Gewicht realisiert werden, die insbesondere auch für Leichtdächer gut geeignet ist.

Eine Demontage des Systems ist, da die Dachfolie in der Regel nicht oder nur an wenigen Stellen beschädigt wird, ohne erheblichen Aufwand möglich. Beispielsweise kann eine Schweißverbindung zwischen der Dachfolie und dem Systemdichtelement leicht gelöst werden.

Vorzugsweise ist das Trägerelement aus Holz hergestellt. Als besonders vorteilhaft hat es sich das Trägerelement aus Holz zu verwenden, da bei der Bearbeitung und Montage von Holzelementen, im Gegensatz zu Metallbauteilen, keine Späne entstehen können, die die Dachabdichtung, insbesondere eine Dachfolie, beschädigen können.

Das Montagesystem umfasst vorzugsweise Befestigungsmittel zur Befestigung des Trägerelements am Flachdach.

Die Befestigungsmittel sind vorzugsweise zur Befestigung an der Unterkonstruktion des Dachs ausgebildet. Dadurch wird eine ausreichende Stabilität gewährleistet. Außerdem werden die statischen Anforderungen an die gesamte Konstruktion erfüllt.

Die Befestigungsmittel weisen insbesondere wenigstens einen sich vom Trägerelement erstreckenden Schaft zum Durchgriff durch das Dach zur Unterkonstruktion des Dachs auf. Als Befestigungselemente werden in der Regel Schrauben, Bolzen, Stifte, o.ä., verwendet. Der Schaft der Schraube ragt durch eine Öffnung im Dach hindurch und wird an der Unterkonstruktion fixiert.

Die Befestigungsmittel können am Trägerelement angeordnet sein und vom Systemdichtelement wenigstens an der vom Flachdach abgewandten Seite wenigstens teilweise umschlossen werden. Insbesondere können die Befestigungsmittel zusammen mit dem Trägerelement in das Systemdichtelement eingeschweißt sein. In das Trägerelement können nun in beliebiger Art und Weise weitere Schrauben oder Bolzen eingebracht werden, ohne die Dichtigkeit des Systems zu beeinträchtigen. So können beispielsweise Befestigungswinkel, Modulhalterungen, Modulschienen, o.ä., variabel am Trägerelement befestigt werden.

Das Montagesystem umfasst vorzugsweise wenigstens ein Verbindungselement zur Verbindung des Solarmoduls mit dem Trägerelement.

Das Verbindungselement ist insbesondere an einer vom Trägerelement abgewandten Seite der wasserdichten Folie angeordnet.

Das Verbindungselement kann mittels wenigstens eines Befestigungselements mit dem Trägerelement verbunden sein. Als Befestigungselemente können Schrauben, Bolzen, Stifte, o.ä., verwendet werden.

Das Verbindungselement kann aus einem oder mehreren Teilen bestehen, die das Solarmodul bezüglich des Trägerelements fixieren. Das Verbindungselement kann wenigstens ein Haltemittel und/oder eine Modulschiene und/oder eine Anständerung und/oder eine Montageschiene zur Befestigung des Solarmoduls aufweisen. Beispielsweise kann das Haltemittel als Befestigungswinkel ausgebildet sein. Sofern eine Montageschiene verwendet wird, kann diese quer oder längs an den Trägerelementen angebracht werden, anschließend können Modulschienen quer oder längs an den Montageschienen angebracht werden.

Das Systemdichtelement ist insbesondere mit dem Flachdach verbunden, beispielsweise mittels einer Verschweißung. In einer alternativen Ausführungsform wäre es auch möglich, die Dachfolie aufzuschneiden, das Trägerelement darunter anzuordnen, und die ausgeschnittene Öffnung, beispielsweise mit Hilfe von Klemmen, zu verschließen. Die Öffnung könnte auch mittels eines Systemdichtelements abgedichtet werden.

Das Trägerelement kann wenigstens teilweise in das Systemdichtelement eingeschweißt sein. Das Trägerelement ist jedoch in der Regel vollständig eingeschweißt, so dass ein abgeschlossener Bereich entsteht, in dem sich das Trägerelement befindet, und kein Wasser zu den Öffnungen in der Dachfolie gelangen kann, durch die die Befestigungsmittel hindurch geführt sind.

Das Haltemittel kann als Befestigungswinkel ausgebildet sein.

Die wenigstens eine Verbindungsnaht kann als Schweißnaht zwischen der Dachfolie und dem Systemdichtelement ausgebildet sein. Das Systemdichtelement kann insbesondere mit einer Dachfolie des Flachdaches verbunden sein, insbesondere wasserdicht mit dieser verbunden sein, vorzugsweise verschweißt sein. Das Systemdichtelement und wenigstens ein Teil der Dachfolie umschließen vorteilhafterweise das Trägerelement vollständig.

Die Dachfolie und das Systemdichtelement können beidseitig des Trägerelements durch jeweils wenigstens eine Verbindungsnaht verbunden sein, um beidseitig ein Eindringen von Feuchtigkeit in den Bereich der Durchgangsöffnung der Befestigungsmittel zu verhindern.

Die Verbindungsnaht bzw. die Verbindungsnähte zwischen dem Systemdichtelement (13) und der Dachfolie (21) des Flachdachs (20) sind insbesondere wasserdicht ausgebildet.

Vorzugsweise sind auch das Trägerelement und das Systemdichtelement miteinander verbunden.

In einer bevorzugten Ausführungsform der Erfindung umschließen das Systemdichtelement und/oder die Dachfolie das Trägerelement vollständig.

Das Systemdichtelement kann von einer Seite des Trägerelements über das Trägerelement hinweg zur anderen Seite des Trägerelements geführt sein.

Insbesondere kann das Systemdichtelement wenigstens einen ersten Folienabschnitt und einen zweiten Folienabschnitt aufweisen, und die Dachfolie und der erste Folienabschnitt auf einer ersten Seite des Trägerelements mittels wenigstens einer ersten Verbindungsnaht verbunden sein, und die Dachfolie und der zweite Folienabschnitt können auf einer zweiten Seite des Trägerelements mittels wenigstens einer zweiten Verbindungsnaht verbunden sein.

Der erste Folienabschnitt und/oder der zweite Folienabschnitt können sich auf die der Dachfolie abgewandte Oberseite des Trägerelements erstrecken.

Der erste Folienabschnitt und/oder der zweite Folienabschnitt können auf der Oberseite des Trägerelements befestigt sein.

Der erste Folienabschnitt und/oder der zweite Folienabschnitt können mit/ auf der Oberseite des Trägerelements verschweißt sein.

In einer weiteren Ausführungsform können der erste Folienabschnitt und/oder der zweite Folienabschnitt auf der Oberseite des Trägerelements festgeklemmt sein.

Der erste Folienabschnitt und/oder der zweite Folienabschnitt können auf der Oberseite des Trägerelements mittels wenigstens eines Klemmprofils festgeklemmt sein.

Insbesondere ist das Trägerelement vom Systemdichtelement im Wesentlichen vollständig umschlossen.

In einer besonderen Ausführungsform der Erfindung kann das Systemdichtelement seitlich und/ oder unterhalb des Trägerelements an der Dachfolie befestigt sein.

Das Systemdichtelement kann dabei zwei freie Enden umfassen, die außen um das Trägerelement geführt sind.

Die freien Enden des Systemdichtelements können an/ auf der Oberseite des Trägerelements befestigt sein.

In einer speziellen Ausführungsform kann das Trägerelement wenigstens ein Befestigungsprofil zum Festklemmen eines weiteren Anschlussstücks am Trägerelement aufweisen.

Das Befestigungsprofil kann an der Oberseite des Trägerelements angeordnet sein.

Das Montagesystem weist vorzugsweise wenigstens ein Klemmprofil zum Festklemmen wenigstens eines Teils des Systemdichtelements an der Oberfläche des Trägerelements auf. Das Montagesystem kann wenigstens ein Abdeckprofil zum Abdecken wenigstens eines Teils der Oberfläche des Trägerelements aufweisen.

Die Aufgabe wird auch gelöst durch eine Kombination aus einem Montagesystem wie oben beschrieben mit einem Dach, insbesondere mit einem Flachdach, wobei das Trägerelement mit dem Flachdach verbunden ist.

Besonders geeignet ist die Erfindung für die Montage von Solarmodulen auf Flachdächern. Flachdächer, beispielsweise mit Trapez- oder Wellenprofil, aber auch Dächer mit ebener Oberfläche, weisen in der Regel ein Abdichtsystem auf, um das Eindringen von Feuchtigkeit in die Dachstruktur zu verhindern. Zu diesem Zweck ist eine Dachabdeckung, beispielsweise eine Dachfolie, vorgesehen, die jedoch bei herkömmlicher Montage der Module leicht beschädigt werden kann. Außerdem kann unter der Dachfolie des Flachdachs eine Isolierung vorgesehen sein, so dass der Montageort relativ weich und instabil ist.

In der Regel müssen aufwendige Maßnahmen getroffen werden, um das Eindringen von Wasser im Bereich der Befestigungsmittel zu verhindern. Dies kann dadurch erreicht werden, dass die Dachfolie mit einem Systemdichtelement verschweißt oder die Trägerelemente nach der Befestigung am Dach in eine wasserdichte Folie eingeschweißt werden. Die wasserdichte Folie selbst wird seitlich der Trägerelemente an der Dachfolie angeschweißt. Auf diese Weise entsteht eine einfache und zuverlässige Abdichtung auch im Bereich der Befestigung des Systemdichtelements an der Dachfolie.

Vorzugsweise ist bzw. sind das Trägerelement bzw. die Trägerelemente quer, insbesondere senkrecht, zum Profilverlauf des Flachdaches angeordnet.

Die Kombination weist insbesondere eine Dachunterkonstruktion auf, mit der das Trägerelement verbunden ist.

Das Trägerelement kann mit der Dachunterkonstruktion über sich durch das Dach erstreckende Befestigungsmittel verbunden sein. Im Gegensatz zur Befestigung des Trägerelements an der Oberfläche des Flachdachs, z.B. durch Ankleben, wird so eine für die Statik ausreichende Stabilität erreicht.

Die Befestigungsmittel sind vorzugsweise kraftschlüssig mit dem Dach, insbesondere mit der Unterkonstruktion des Dachs, verbunden. Dadurch kann eine ausreichende statische Stabilität der Verbindung nachgewiesen werden.

Das Trägerelement ist insbesondere auf der Dachfolie angeordnet.

Ein Verfahren zur Montage von Solarmodulen mittels eines Montagesystems, insbesondere mittels eines Montagesystems wie oben beschrieben, umfasst folgende Schritte: a) Anbringen eines Trägerelements auf der Dachfolie eines Dachs, insbesondere eines Flachdachs; b) Umschließen des Trägerelements mittels eines Systemdichtelements; und c) Befestigen des Systemdichtelements an der Dachfolie.

Ein weiteres Verfahren zur Montage von Solarmodulen mittels eines Montagesystems, insbesondere mittels eines Montagesystems wie oben beschrieben, umfasst folgende Schritte:
a) Anbringen eines Systemdichtelements auf der Dachfolie eines Flachdachs, wobei wenigstens ein Verbindungsbereich ausgebildet wird, der einen zu beiden Seiten hin abgeschlossenen Bereich definiert bzw. begrenzt; b) Anordnen eines Trägerelements auf dem Systemdichtelement; c) Befestigen des Trägerelements am Flachdach derart, dass die durch das Anbringen entstandene Öffnung in der Dachfolie innerhalb des Verbindungsbereichs liegt; und d) Wenigstens teilweises Umschließen des Trägerelements durch Anbringen des bzw. der Enden des Systemdichtelements an der Seitenfläche und/oder der Oberfläche des Trägerelements.

Ein Verfahren zur Montage eines Solarmoduls mittels eines Montagesystems, insbesondere mittels eines Montagesystems wie oben beschrieben, kann folgende Schritte umfassen: a) Anbringen eines Trägerelements an einem Dach, insbesondere an einem Flachdach; b) Bedecken des Trägerelements mit einem Systemdichtelement; und c) Befestigen des Systemdichtelements am Dach.

Das zuletzt genannte Verfahren kann einen weiteren Schritt d) umfassen: Anordnen eines Verbindungselements an einer vom Trägerelement abgewandten Seite der wasserdichten Folie, und Befestigen des Verbindungselements am Trägerelement. Der Verfahrenschritt d) kann ein Befestigen eines Halteelements, insbesondere eines Winkels, eines Gleitschuhs, einer Modulschiene, einer Anständerung, etc., am Trägerelement umfassen. Durch eine Anständerung, die ein Anbringen der Solarmodule in einem gewünschten Winkel erlaubt, kann die Solarausbeute erhöht werden. Alternativ dazu kann auch das Solarmodul direkt, beispielsweise über eine Schraubverbindung, am Trägerelement befestigt werden. Außerdem kann der Verfahrensschritt d) ein Befestigen einer Modulschiene an dem Halteelement umfassen. Das Halteelement kann mit dem Trägerelement beispielsweise verschraubt oder vernietet sein.

Das Umschließen/ Bedecken des Trägerelements mit einem Systemdichtelement im Verfahrensschritt b) umfasst insbesondere ein wenigstens teilweises Umschließen/ Bedecken mittels einer wasserdichten Folie.

Das Umschließen des Trägerelements mit dem Systemdichtelement kann ein wenigstens teilweises Einschweißen des Trägerelements in das Systemdichtelement umfassen.

Das Anbringen bzw. Befestigen des Trägerelements am Flachdach kann ein Befestigen des Trägerelements an der Unterkonstruktion des Dachs umfassen.

Insbesondere umfasst das Befestigen bzw. Anbringen des Systemdichtelements an der Dachfolie das Bilden einer wasserdichten Verbindung mit der Dachfolie des Daches.

Das Systemdichtelement kann vorzugsweise mit der Dachfolie verschweißt werden.

Das Trägerelement wird insbesondere quer zu einem Profilverlauf des Flachdaches angeordnet.

Das Verfahren umfasst vorzugsweise einen weiteren Schritt: Anordnen eines Verbindungselements an der Seite und/oder der Oberfläche des Trägerelements in einem Bereich, den das Systemdichtelement nicht abdeckt, und/oder an der Seite und/oder der Oberfläche des Trägerelements in einem Bereich, den das Systemdichtelement abdeckt, auf der Außenseite des Systemdichtelements.

Der weitere Verfahrenschritt kann ein Befestigen eines Halteelements, insbesondere eines Winkels, Profils oder Gleitschuhs, am Trägerelement umfassen. Der weitere Verfahrensschritt kann auch ein Befestigen einer Modulschiene an dem Halteelement umfassen.

Mit Hilfe des Systems sind das Dach bzw. die Dachfolie direkter UV-Strahlung weniger ausgesetzt, wodurch sich die Lebensdauer des Dachs erhöhen kann. Außerdem bieten die montierten Module bei hoher Sonneneinstrahlung Schutz vor zu hoher Wärmebelastung des Gebäudes. Die Dachfolie selbst ist, insbesondere bei der kraftschlüssigen Befestigung des Montagesystems an der Unterkonstruktion des Dachs statt an der Dachfolie, besser vor Windsogkräften und mechanischer Belastung geschützt.

### KURZE BESCHREIBUNG DER FIGUREN

Weitere Merkmale und Vorteile der Erfindung werden aus der nachfolgenden Beschreibung bevorzugter Ausführungsbeispiele an Hand der Figuren deutlich. Es zeigen:
- Figuren 1a - 1d: Verfahrensschritte zur Montage eines Solarmoduls an einem Trapezdach in einer ersten Ausführungsform der Erfindung;
- Figur 2: eine Schnittansicht der ersten Ausführungsform des montierten Montagesystems;
- Figur 3: eine perspektivische Ansicht der ersten Ausführungsform des montierten Montagesystems;
- Figur 4: eine weitere perspektivische Ansicht der ersten Ausführungsform des montierten Montagesystems;
- Figur 5: eine Ansicht einer zweiten Ausführungsform der Erfindung;
- Figur 6a: eine Ansicht einer dritten Ausführungsform der Erfindung ohne Modulschiene;
- Figur 6b: eine Ansicht der dritten Ausführungsform der Erfindung mit Modulschiene;
- Figur 7: eine Schnittansicht einer vierten Ausführungsform der Erfindung;
- Figuren 8a - 8d: Verfahrensschritte zur Montage eines Solarmoduls an einem Trapezdach in einer fünften Ausführungsform der Erfindung;
- Figuren 9a - 9c: Verfahrensschritte zur Montage eines Solarmoduls an einem Trapezdach in einer sechsten Ausführungsform der Erfindung;
- Figur 10: eine Ansicht einer siebten Ausführungsform der Erfindung;
- Figuren 11a, 11b: ein erstes Konzept einer erfindungsgemäßen Dachsanierung;
- Figuren 12a -12c: ein zweites Konzept einer erfindungsgemäßen Dachsanierung;
- Figur 13: ein drittes Konzept einer erfindungsgemäßen Dachsanierung; und
- Figur 14: ein viertes Konzept einer erfindungsgemäßen Dachsanierung.

### BESCHREIBUNG BEVORZUGTER AUSFÜHRUNGSBEISPIELE

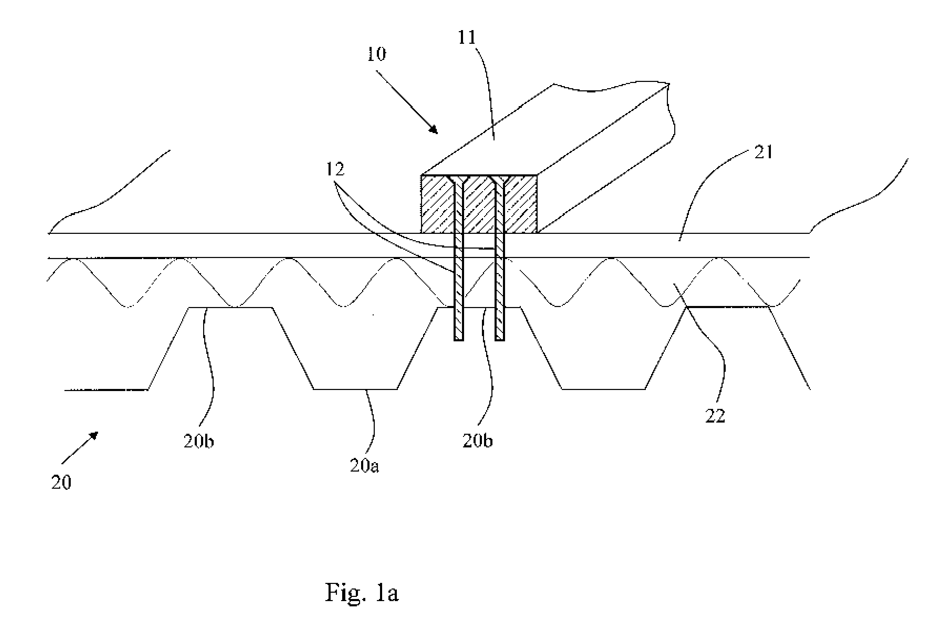

Die Figuren 1a bis 1d zeigen Komponenten eines erfindungsgemäßen Montagesystems 10, wie sie in aufeinander folgenden Verfahrenschritten auf ein Flachdach 20 montiert werden.

Das Flachdach 20 weist eine trapezartige Struktur mit sich in Richtung L längs erstreckenden trapezförmigen Vertiefungen 20a und benachbarten, sich in Richtung L längs erstreckenden trapezförmigen Vorsprüngen 20b auf. Die Vertiefungen 20a und die Vorsprünge 20b verlaufen in einer Längsrichtung L parallel zueinander. Auf dem Flachdach 20 ist eine Abdeckfolie 21 angeordnet. Unter der Abdeckfolie 21 kann wahlweise weiches Dämmmaterial 22 (Styropor, Glaswolle, etc.) angeordnet sein.

Das Montagesystem 10 weist mehrere Holzbohlen oder Aluminiumprofile 11 auf, die auf der Abdeckfolie 21 liegen und beispielsweise mittels Schrauben 12 am Flachdach 20 befestigt werden. Die Schrauben 12 ragen durch die Dachfolie 21 und die Dämmung 22 hindurch, um an einem Vorsprung 20b bzw. dem Unterbau des Flachdachs befestigt zu werden.

Die Bohlen 11 sind in der Längsrichtung L am Flachdach 20 ausgerichtet. Die Bohlen 11 werden in bestimmten Abständen parallel zueinander am Flachdach 20 befestigt. Die Bohlen 11 sind so konzipiert, dass sie Druck- und Soglasten, die im Zusammenhang mit Solarmodulen auftreten können, auf das Flachdach verteilen können. Dazu weisen die Bohlen eine bestimmte Höhe und Breite von wenigstens mehreren Zentimetern und eine Länge auf, die viel größer als deren Höhe und Breite ist. So kann die Last auf eine Vielzahl von Befestigungen am Flachdach, bzw. auf eine große Länge des Flachdachs verteilt werden. Die beschriebenen Vorrichtungen und Verfahren sind daher für weiche Foliendächer und Leichtbaudächer geeignet.

Wird eine Bohle quer oder senkrecht zur Längsrichtung L angebracht, so kann die Bohle an mehreren Erhöhungen des Trapezdachs befestigt werden. Die Last wird so verteilt, dass die eventuell unter der Dachfolie 21 liegende Isolierung 22 keinen Schaden nimmt.

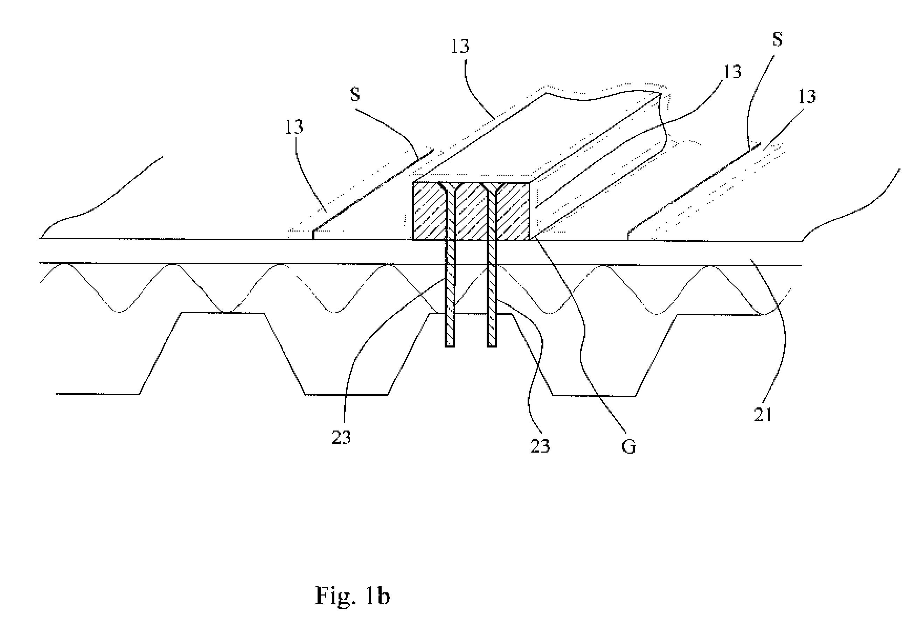

Die Bohle 11 wird im Verfahrensschritt gemäß Figur 1b mittels einer Folie 13 eingeschweißt, wobei die Folie 13 mittels wenigstens einer Schweißnaht S pro Seite an die Dachfolie 21 angeschweißt wird, so dass die Bohle 11 vollständig von den Folien 21 und 13 umschlossen wird. Auf diese Weise sind die Befestigungsschrauben 12 vollständig von den Folien 11 bzw. 13 umschlossen, so dass ein Eindringen von Feuchtigkeit durch die Dachfolie 21 zum Flachdach 20 hin verhindert wird. Insbesondere wird ein Eindringen von Feuchtigkeit in den Spalt G zwischen der Bohle 11 und der Dachfolie 21 verhindert, so dass die Feuchtigkeit nicht bis zu den Öffnungen 23 in der Dachfolie 21 vordringen und von dort in den Bereich unter die Dachfolie 21 gelangen kann.

Neben oder zwischen den eingeschweißten Bohlen können (nicht dargestellt) auch Bohlen angeordnet werden, die nicht mit dem Dach verschraubt und lediglich durch Ballast, der auf die Folie gebracht wird, in ihrer Position gehalten werden. Als Ballast können z.B. Kies oder Platten auf die Folie aufgebracht werden.

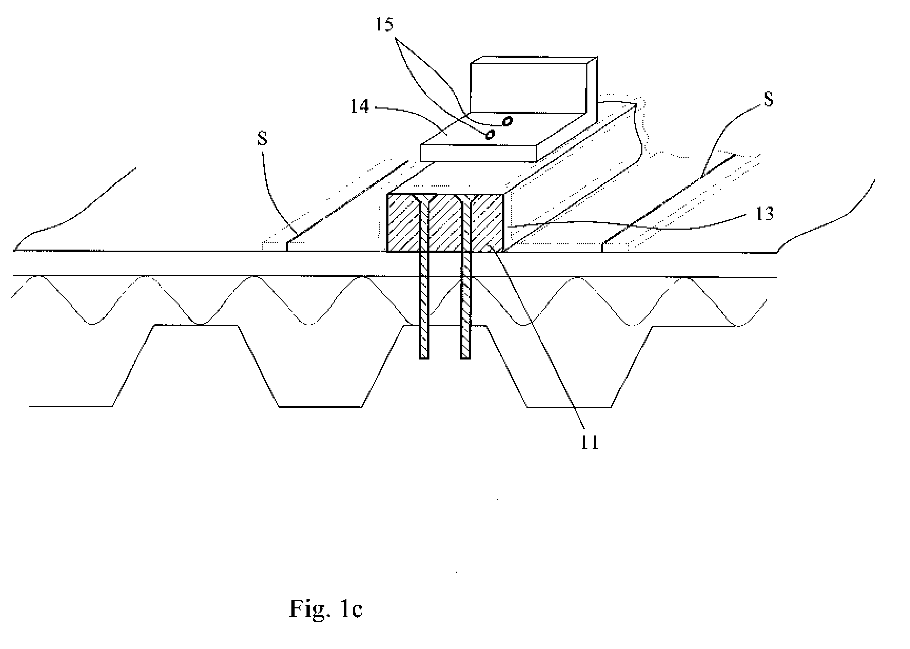

In einem weiteren Verfahrens schritt gemäß der Figur 1c wird ein Haltewinkel 14 beispielsweise aus Aluminium, an der zuvor eingeschweißten Bohle 11 befestigt. Die Befestigung erfolgt beispielsweise durch Schrauben 15.

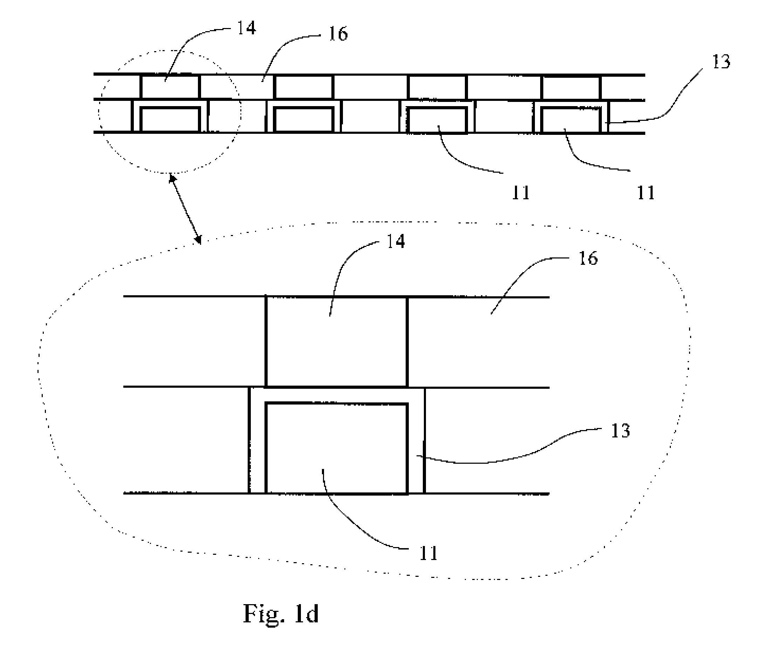

In der Figur 1d ist ein größerer Abschnitt mit mehreren Bohlen 11 und daran befestigten Haltewinkeln 14 dargestellt. An den Haltewinkeln 14 sind dabei Modulschienen 16, beispielsweise aus Aluminium, quer zu den Bohlen 11 befestigt. In dem letzten Montageschritt (nicht dargestellt) erfolgt die Befestigung der Solarmodule an den Modulschienen 16, d.h. zwischen jeweils zwei parallel angeordneten Modulschienen 16.

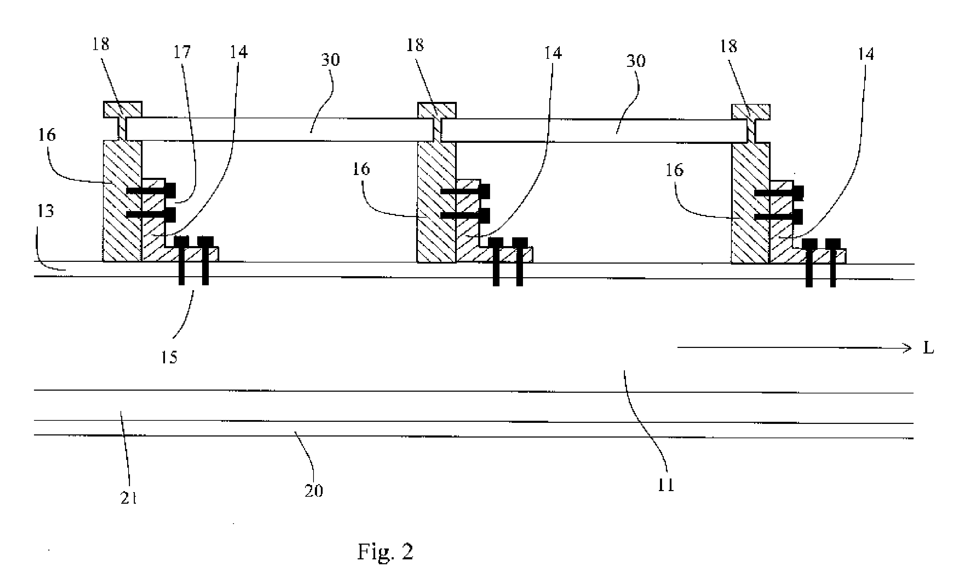

Eine Ausführungsform mit montierten Solarmodulen 30 ist in einer Schnittansicht gemäß der Figur 2 gezeigt. Auf dem Flachdach 20 ist eine Abdeckfolie 21 angeordnet. Auf der Abdeckfolie 21 liegt eine Bohle 11 auf, die beispielsweise mittels Schrauben (nicht dargestellt) am Flachdach 20 befestigt ist. Die Bohle 11 ist zudem in eine wasser- oder feuchtigkeitsdichte Folie 13 und die Dachfolie 21 (oberhalb der Dachfolie) eingeschweißt, so dass sie vollständig von den Folien 21 und 13 umschlossen wird.

An der Oberseite der Bohlen 11 sind parallel beabstandete Haltewinkel 14, beispielsweise mittels Schrauben 15, befestigt. Die Haltewinkel 14 selbst tragen beispielsweise über eine weitere Schraubverbindung 17 befestigte, parallel zueinander angeordnete und senkrecht zur Längsrichtung L angeordnete Modulschienen 16.

An den Modulschienen 16 sind, beispielsweise mittels Klemmverbindungen 18, Solarmodule 30 befestigt.

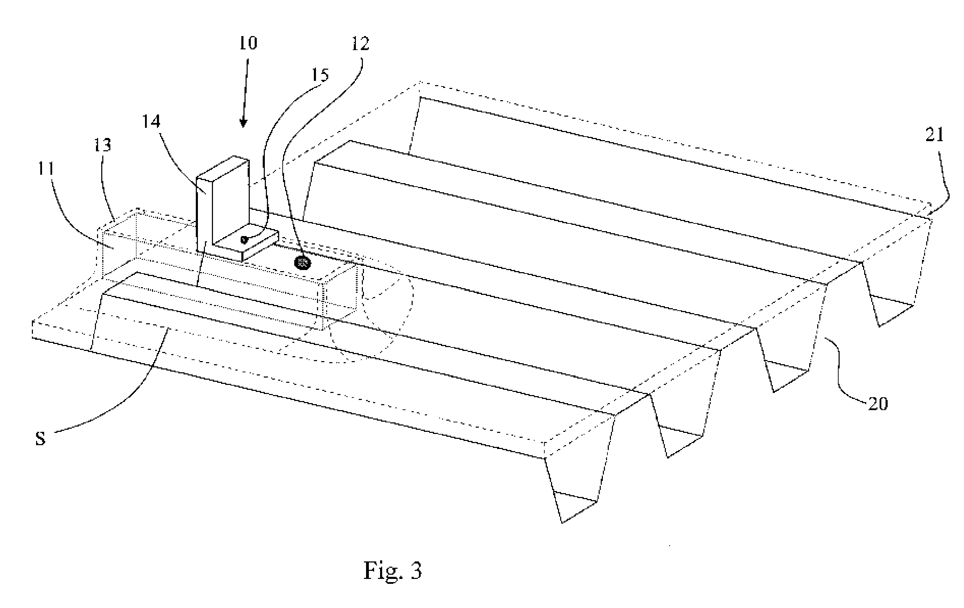

Eine perspektivische Ansicht des Aufbaus aus der Figur 2 ist in der Figur 3 dargestellt. Die Bezugszeichen stellen gleiche Komponenten dar wie im Zusammenhang mit den vorherigen Figuren beschrieben.

Demnach ist an der Oberfläche des Trapezdachs 20 eine Dachfolie 21 angeordnet. Die Bohlen 11 sind auf der Dachfolie 21 angeordnet und von einer Folie 13 sowie einem Teil der Dachfolie 21 umschlossen. Die Folie 13 ist mit der Dachfolie 21 beidseitig über jeweils eine Schweißnaht S verschweißt. Auf diese Weise ist das Dach 20 vor dem Eindringen von Flüssigkeit, insbesondere auch in den Bereich der Öffnung in der Dachfolie 21, durch die die Schrauben 12 hindurch ragen, geschützt. Auf der Oberfläche der der Bohle 11 abgewandten Seite der Folie 13 ist mittels weiterer Schrauben 15 ein Befestigungswinkel 14 befestigt.

Der Befestigungswinkel 14 dient allgemein als Verbindungselement zum Anbringen, beispielsweise einer Modulschiene, an der das Solarmodul befestigt wird, oder anderer Mittel zur Befestigung des Solarmoduls. Der Befestigungswinkel 14 kann dabei in beliebiger Weise als Verbindungselement zwischen der Bohle 11 und den am Verbindungselement 14 unmittelbar oder mittelbar angebrachten Solarmodulen 30 ausgebildet sein.

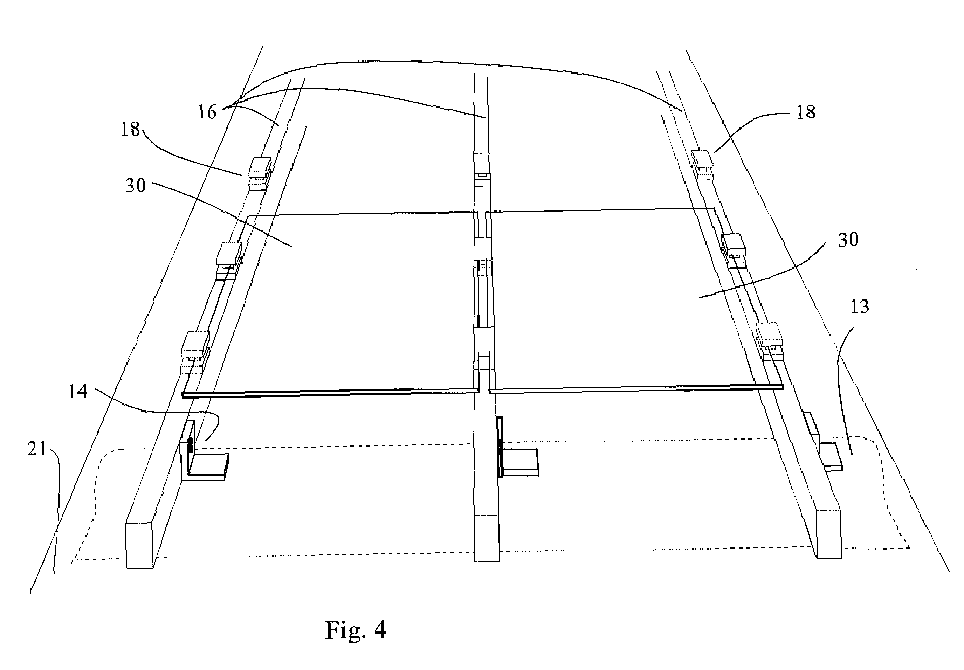

Die Figur 4 zeigt eine weitere Perspektive von mit Hilfe des erfindungsgemäßen Montagesystems montierten Solarmodulen 30. Die Module 30 sind jeweils zwischen zwei Modulschienen 16 montiert. Eine Bohle wie vorher beschrieben ist quer zu den Modulschienen 16 ausgerichtet und von einer Abdeckfolie 13 abgedeckt, die an allen Seiten mit der Dachfolie 21 verschweißt ist.

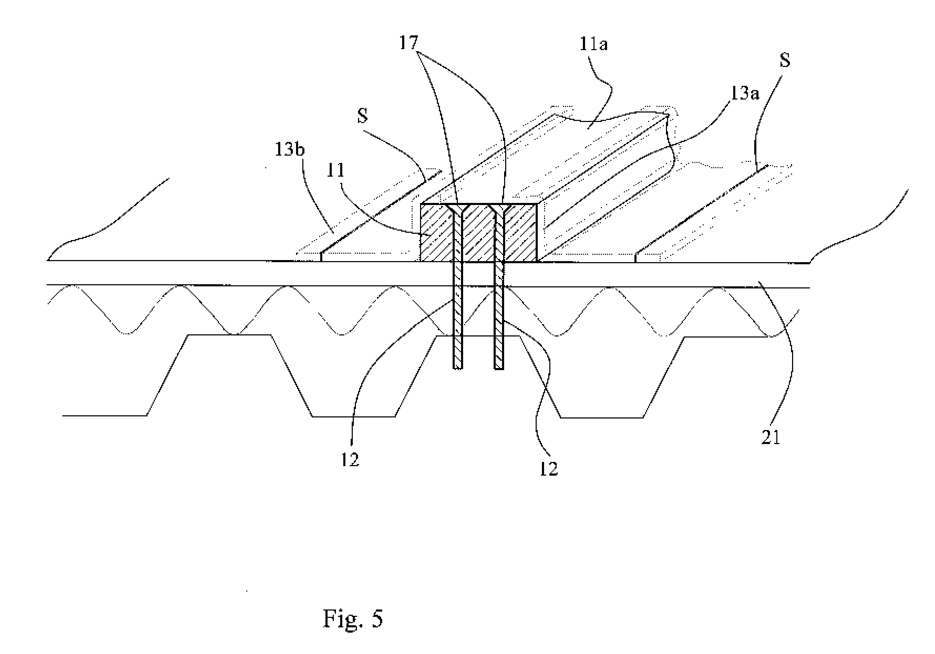

Die Figur 5 zeigt eine weitere Ausführungsform der Erfindung. Im Unterschied zur bisher beschriebenen Ausführungsform besteht die Abdeckfolie aus zwei Teilen 13a und 13b. Der erste Teil 13a der Folie ist auf der ersten Seite der Bohle 11 angeordnet und erstreckt sich von der Oberseite 11a der Bohle 11 seitlich nach unten bis zur Dachfolie 21. Dort ist sie mittels einer Schweißnaht S verschweißt. Der zweite Teil 13b der Folie 13 erstreckt sich in ähnlicher Weise von der gegenüberliegenden Seite der Oberfläche 11a der Bohle 11 nach unten bis zur Dachfolie 21 und ist dort mit einer Schweißnaht S mit der Dachfolie 21 verschweißt.

Die Folienenden der Folienteile 13a und 13b sind an der Oberseite 11a der Bohle 11 ebenfalls befestigt, beispielsweise verschweißt, verklebt, o. ä. Bei dieser Ausführungsform sind die Zugangsöffnungen 17 für die Befestigungsschrauben 12 auch nach dem Verschweißen frei zugänglich. Auf diese Weise ist es möglich, auch nach dem Einschweißen der Bohle 11 diese zu befestigen oder die Befestigungsschrauben 12 zu lösen.

Die Öffnungen 17 in der Bohle 11 können wahlweise abgedeckt werden, beispielsweise mittels eines Abdeckprofils. Sie können jedoch auch durch Verkleben, o. ä. abgedichtet werden.

Diese Ausführungsform ist es besonders dazu geeignet, vormontierte Montagekomponenten, bestehend wenigstens aus der Bohle 11 und den an der Oberfläche 11a der Bohle 11 befestigten Abdeckfolien 13a und 13b bereitzustellen. Das vormontierte Bauteil kann in diesem Zustand ohne weiteres am Dach ausgerichtet und mittels der Befestigungsschrauben 12 montiert werden. Vor oder nach der Befestigung können die Folienteile 13a, 13b an der jeweiligen Seite der Bohle 11 verschweißt werden.

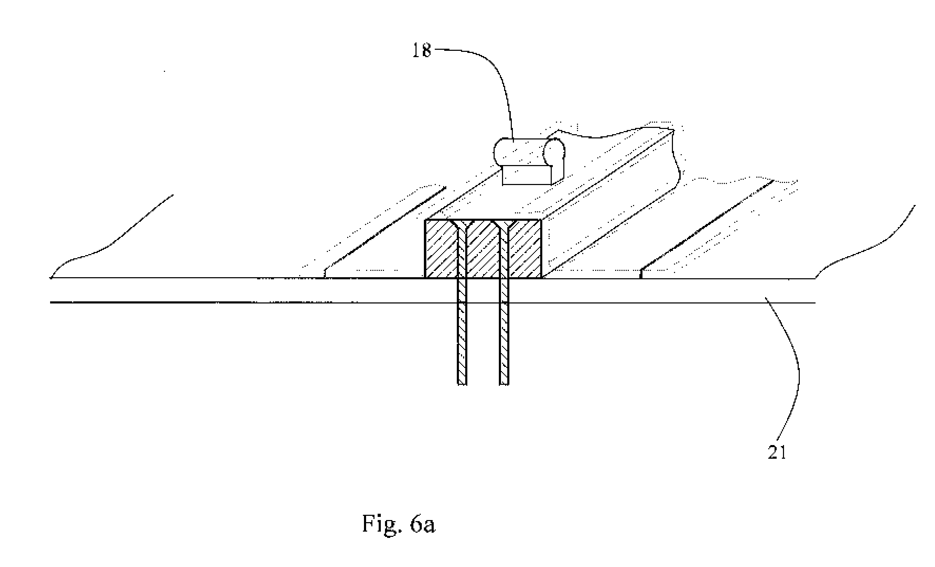

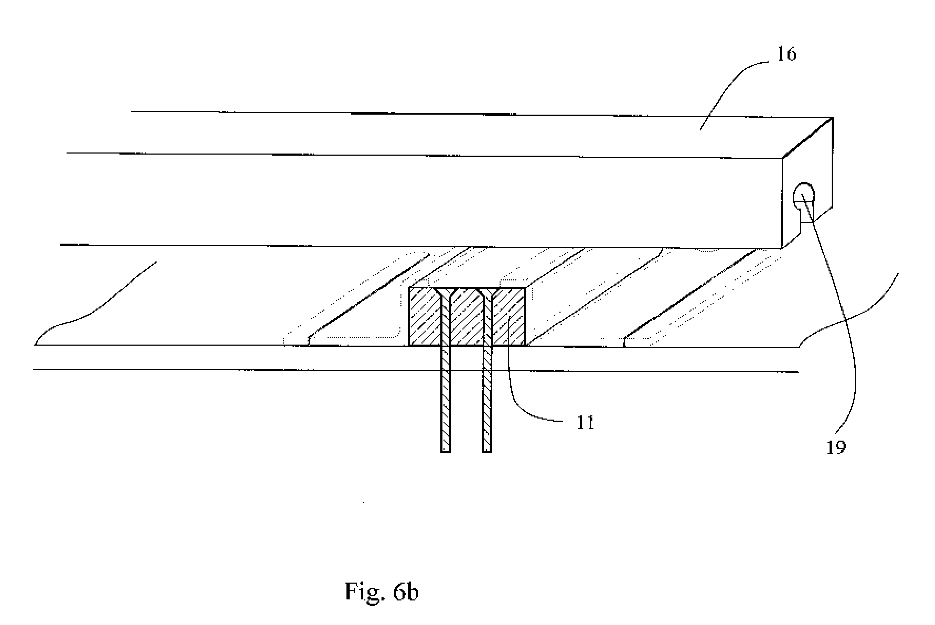

Zudem kann an der Bohle 11 ein Verbindungselement, beispielsweise einen Haltewinkel 14 oder ein Profil 18, angebracht sein, das mit einem an den Modulschienen 16 ausgebildeten Gegenprofil 19 zusammenwirken kann, um die Modulschiene 16 in einfacher Weise zu befestigen. Die Figur 6a zeigt schematisch ein derartiges Profil 18. In der Figur 6b ist eine Modulschiene 16 mit einem entsprechenden Gegenprofil 19 auf die Bohle 11 aufgeclipst. Auf diese Weise ist eine besonders einfache Montage der Solarmodulanlage auf einem Flachdach möglich.

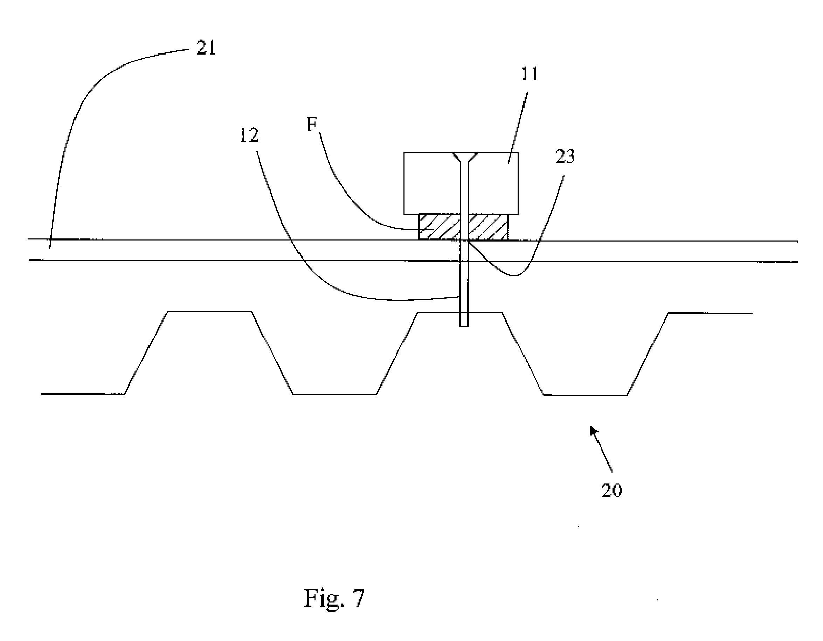

Die Figur 7 zeigt eine weitere Ausführungsform der Erfindung in einer Schnittansicht senkrecht zur Längsachse L des Trapezdaches 20. In diesem Ausführungsbeispiel wird die Bohle 11 über eine flächige, wasserdichte Verbindung F mit der Dachfolie 21 verbunden. Die flächige Verbindung F, beispielsweise eine Klebeverbindung, hindert Feuchtigkeit, die sich auf der Dachfolie 21 befindet, daran, in die Durchgangsöffnung 23 einzudringen, durch die die Befestigungsschraube 12 geführt ist.

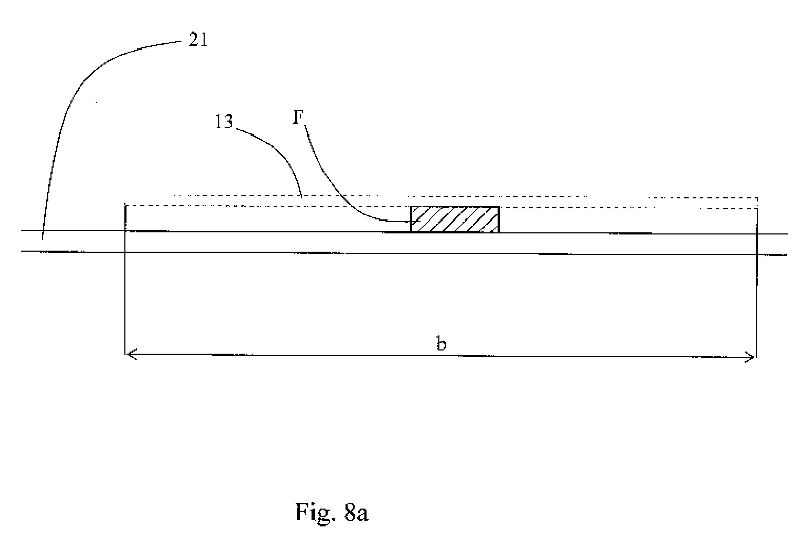

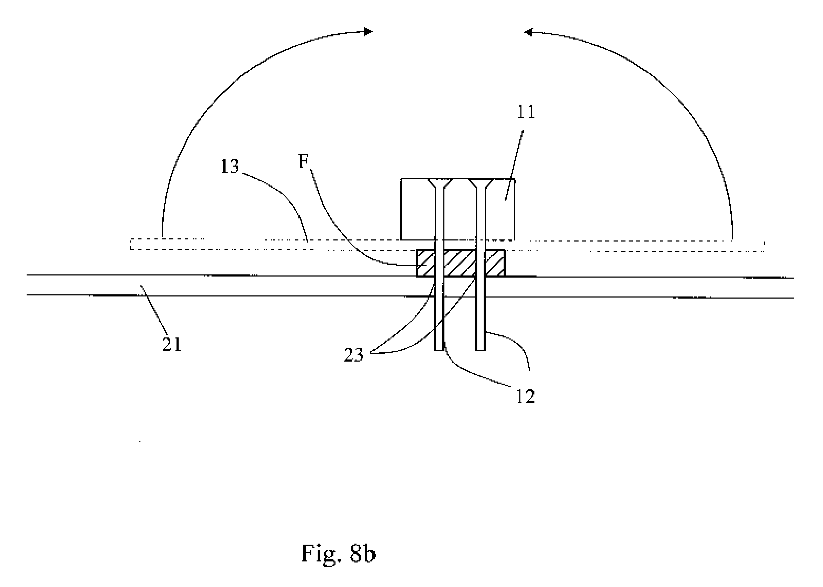

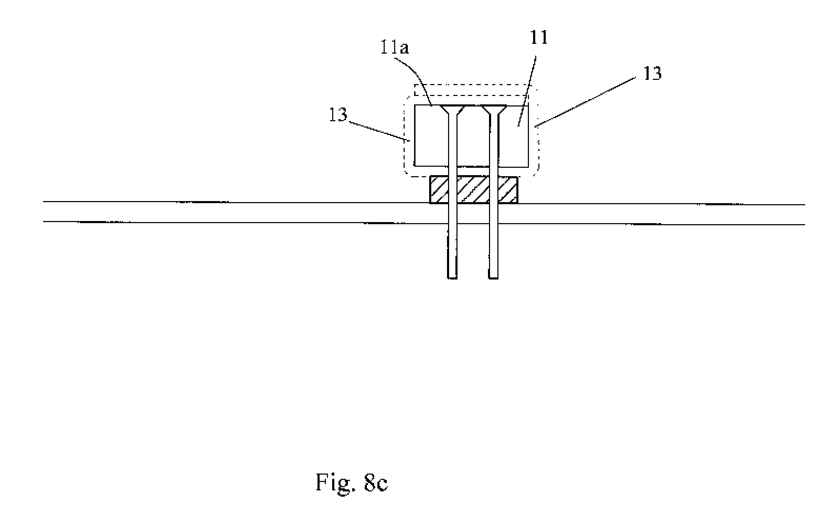

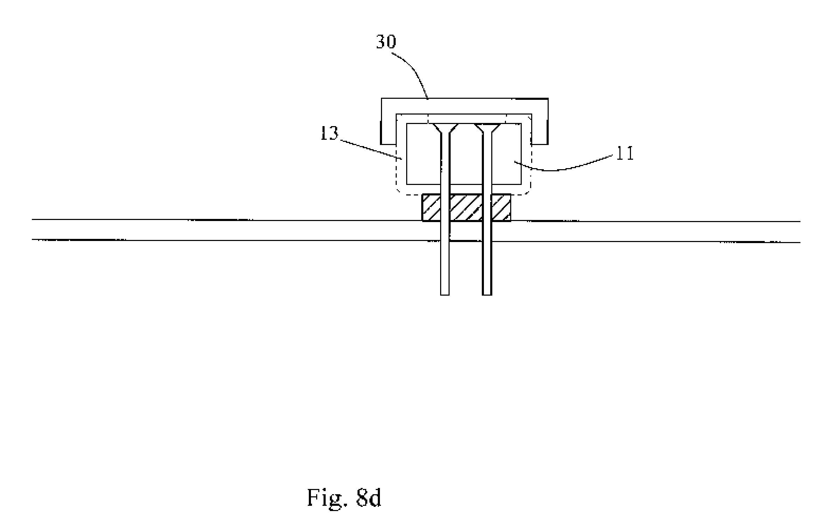

In der Figur 8a ist ein erster Schritt in der Montage eines fünften Ausführungsbeispiels der vorliegenden Erfindung dargestellt. Zunächst wird eine Folie 13 mit einer Breite b bereitgestellt und über eine flächige Verbindung F an der Dachfolie 21 eines Trapezdachs 20 befestigt.

In einem weiteren Verfahrensschritt 8b wird eine Bohle 11 im Bereich der flächigen Verbindung F auf die Folie gelegt und ausgerichtet. Die Bohle 11 wird anschließend mittels Befestigungsschrauben 12, die durch die flächige Verbindung F hindurchragen, an der Dachunterkonstruktion befestigt. Die flächige Verbindung F hindert Feuchtigkeit daran, in die Öffnungen 23 einzudringen.

In einem weiteren Verfahrens schritt 8c wird die Folie 13 beidseitig über die Oberseite 11a der Bohle 11 übergeschlagen und an deren Oberseite 11a befestigt. Die Bohle 11 wird somit von der Folie 13 umschlossen.

Die Folie 13 kann auf der Oberseite 11a in beliebiger Weise befestigt werden, beispielsweise durch Verschweißen der beiden Enden der Folie 13, durch Kleben, o. ä.

Es ist jedoch auch denkbar, wie im Verfahrensschritt 8d gezeigt, die Folie an der Oberseite der Bohle 11 mittels eines Klemmprofils 30 festzuhalten. Das Klemmprofil 30 seinerseits kann notwendige Profile, Verbindungseinrichtungen, o. ä. zum direkten Anbringen eines Solarmoduls bzw. einer Modulschiene aufweisen.

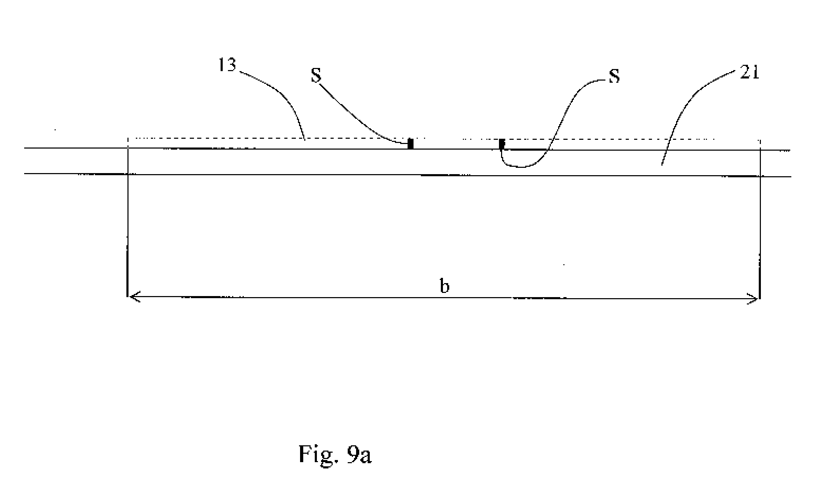

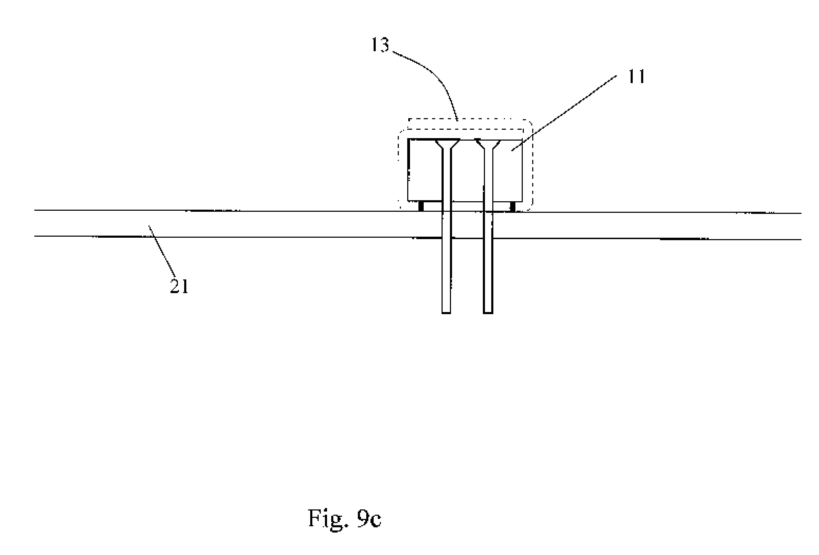

Ein weiteres Ausführungsbeispiel der Erfindung ist in den Figuren 9a und 9c dargestellt. Zunächst wird eine Folie 13 mit einer Breite b auf einer Dachfolie 21 befestigt, beispielsweise mittels zweier beabstandeter Schweißnähte S. Diese Schweißnähte können maschinell erzeugt werden und hindern Wasser, von Außen in den Bereich zwischen die Schweißnähte S einzudringen.

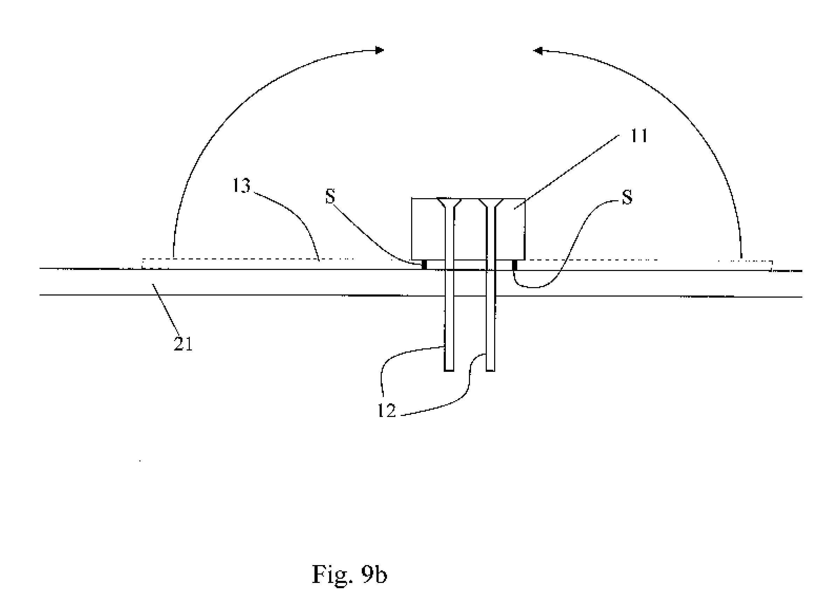

Im Verfahrensschritt 9b wird eine Bohle 11 zwischen den Schweißnähten S auf der Folie 13 angeordnet und mittels Befestigungsschrauben 12 an der Dachkonstruktion befestigt. Anschließend werden, wie in der Figur 9b durch Pfeile dargestellt, die Enden der Folie 13 auf beiden Seiten über die Bohle 11 gestülpt.

In der Figur 9c ist die festig montierte Bohle 11 dargestellt, die mittels der Folie 13, deren Enden auf der Oberseite der Bohle befestigt wurden, vor Umwelteinflüssen geschützt dargestellt.

Auf das Befestigen der Enden der Folie 13 kann im Übrigen verzichtet werden, sofern, beispielsweise durch Verschrauben, Befestigungswinkel an der Oberseite der Bohle 11 angeschraubt werden. Durch die Schraubverbindung für die Befestigungswinkel wird die Folie 13 in ihrer Position gehalten.

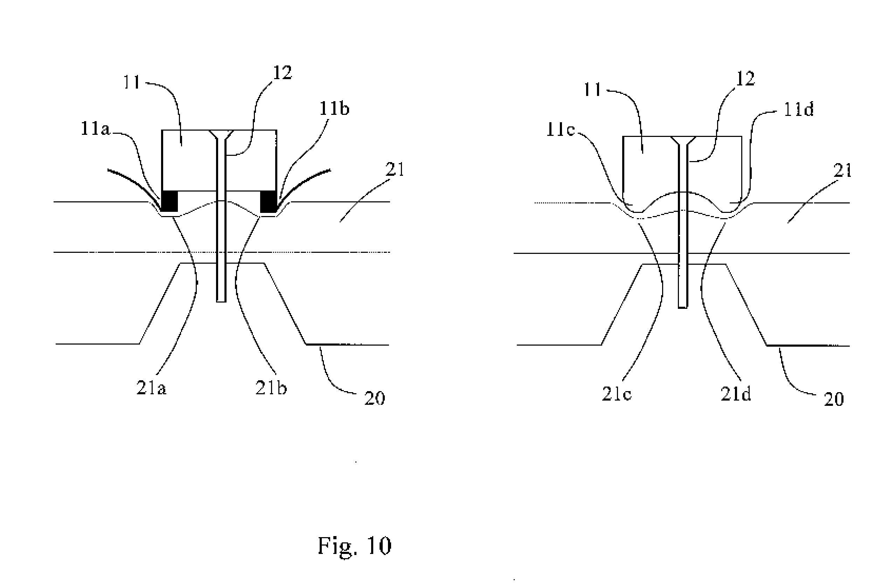

Die Figur 10 zeigt eine weitere Ausführungsform der Erfindung. Dabei weisen die Trägerelemente 11 ein Profil, z.B. Füße 11a, 11b oder Vorsprünge bzw. Nasen 11c, 11d auf die die Dachfolie 21 bei der Befestigung der Trägerelemente 11 mit Schrauben 12 am Dach 20 eindrücken und Abflussrinnen 21a, 21b bzw. 21c, 21d in der Dachfolie 21 ausbilden. Die Öffnung, durch die die Schraube 12 durch die Dachfolie 21 ragt, liegt dem gegenüber höher, so dass in den Kanälen 21a, 21b, 21c, 21d abfließendes Wasser nicht in den Bereich der Öffnung gelangen kann. Die Trägerelemente 11 können, müssen aber nicht, zusätzlich in einer Folie (nicht dargestellt) eingeschweißt sein, wie im Zusammenhang mit den anderen Ausführungsbeispielen beschrieben.

Insgesamt bietet das erfindungsgemäße Monatagesystem kaum eine Möglichkeit, dass Feuchtigkeit in den Bereich des Flachdaches 20 unter die Dachfolie 21 eindringt. Andererseits ist die Montage gegenüber bekannten Systemen vereinfacht.

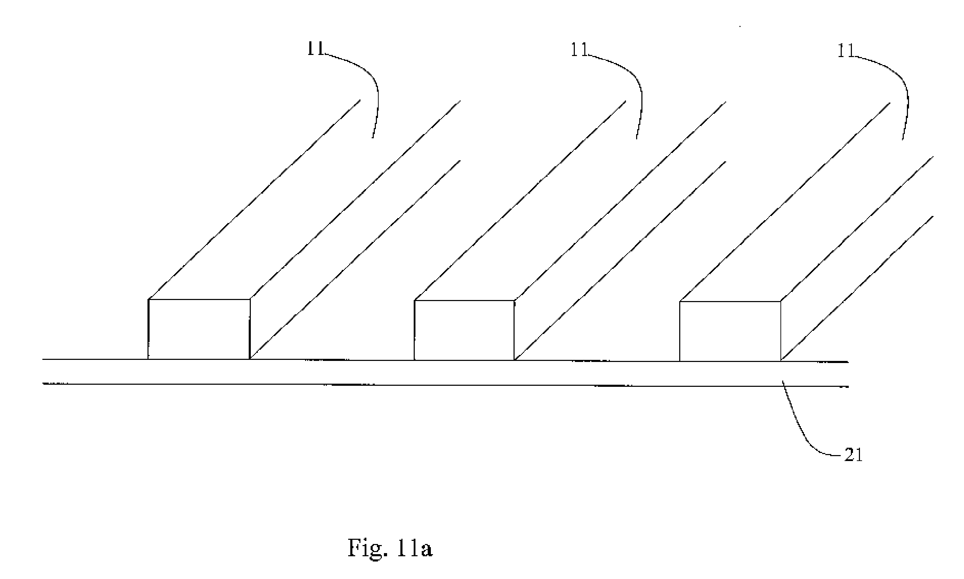

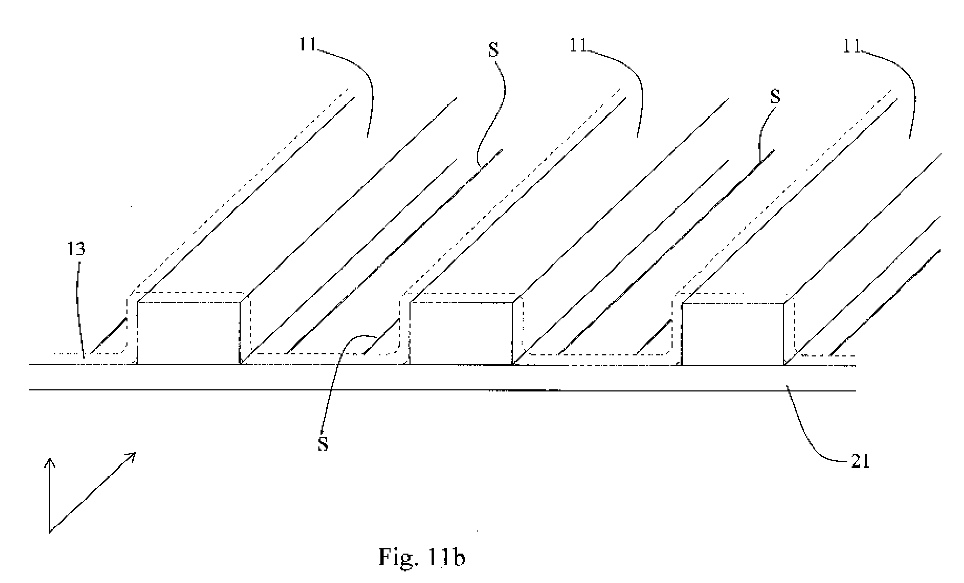

Die Figur 11 zeigt ein erstes Konzept einer erfindungsgemäßen Flachdachsanierung.

In der Praxis kommt es häufig vor, dass die Dachfolie 21 eines sanierungsbedürftigen Flachdachs ausgetauscht bzw. erneuert werden muss. Dies geschieht in der Regel durch Abnehmen der alten Dachfolie und Anbringen einer neuen Dachfolie.

Die erfindungsgemäße Dachsanierung erfolgt ohne wesentlich größeren Aufwand während der Montage von Solarmodulen auf dem Flachdach. Wie in Figur 11a dargestellt, werden zunächst Bohlen 11 auf der bisherigen Dachfolie 21 angeordnet und an der Unterkonstruktion des Dachs befestigt.

Anschließend wird, wie in der Figur 11b dargestellt, eine Dachfolie 13 bereitgestellt und über die Bohlen 11 gelegt. Die Dachfolie 13 dient als Abdeckfolie für die Bohlen 11, wie in den vorhergehenden Ausführungsbeispielen beschrieben.

Die Dachfolie 13 kann daraufhin an verschiedenen Stellen, insbesondere in Längsrichtung L des Flachdachs, an beliebigen Stellen mit der bisherigen Dachfolie 21 verschweißt werden. Die Schweißnähte S werden so angeordnet, dass einerseits ein sicherer Halt der neuen Dachfolie 13 entsteht, andererseits die Bohle 11 zuverlässig von der neuen Dachfolie 13 umschlossen werden. Der übrige Aufbau der Solarmodule erfolgt wie beispielsweise im Zusammenhang mit den Figuren 1a bis 1d beschrieben.

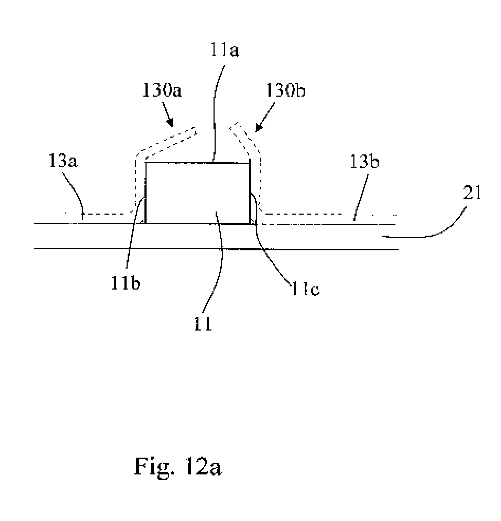

Die Figur 12a zeigt ein weiteres Konzept zur Dachsanierung im Rahmen der Montage von Solarmodulen auf einem Flachdach.

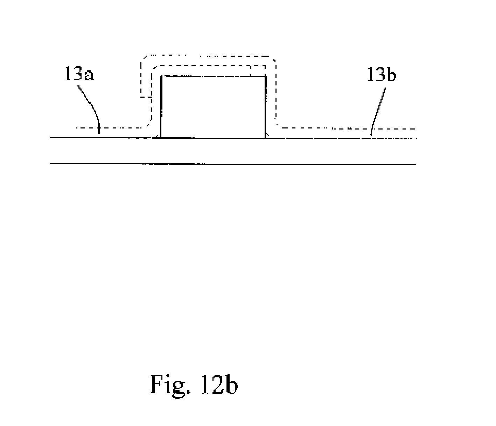

Bei diesem Verfahren wird ein erstes Folienstück 13a bereitgestellt, dessen erstes Ende 130a mindestens bis zur Seite 11b der Bohle 11 heranreicht. Dies bedeutet, dass das Ende 130a des Folienstücks 13a an der Seite 11b der Bohle 11 hoch geführt und insbesondere auf die Oberfläche 11a der Bohle 11 geführt werden kann. Von der anderen Seite der Bohle 11 wird ein weiteres Folienstück 13b mit einem freien Ende 130b herangeführt, das ebenfalls eine redundante Länge aufweist, d. h. dessen freies Ende 130b ebenfalls an der Seite 11c der Bohle 11 hoch geführt und insbesondere über die Oberfläche 11a der Bohle 11 geführt werden kann. Bei dieser Sanierungsmethode wird sichergestellt, dass die Endbereiche der Folienstücke 13a und 13b im Bereich der Bohle 11 überlappen, wie dies in der Figur 12b dargestellt ist.

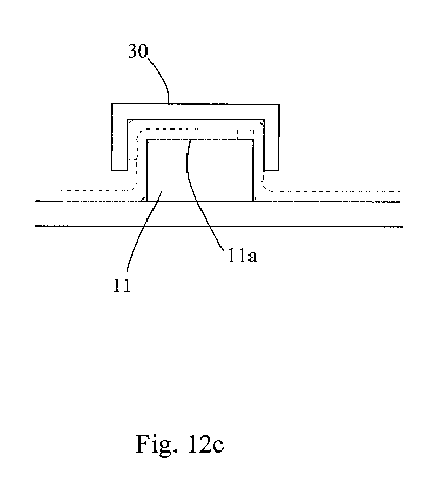

Die überlappenden Bereiche der Folien 13a und 13b können verschweißt werden. Insbesondere können die überlappenden Folienenden jedoch auch, wie in der Figur 12c dargestellt, mittels eines Klemmprofils 30 auf der Oberseite 11a der Bohle 11 befestigt werden.

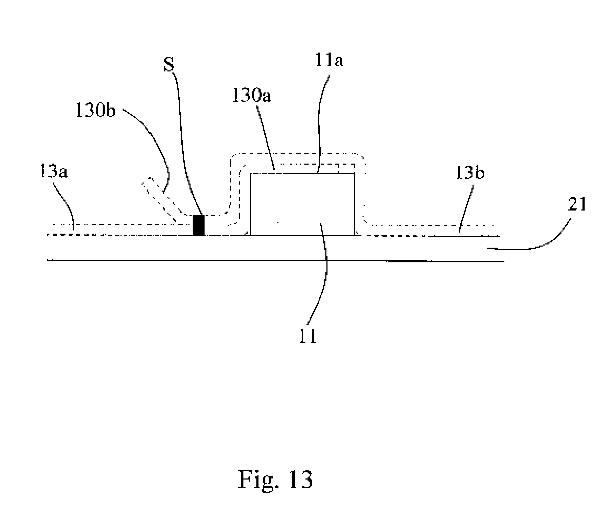

Eine weitere alternative Ausführungsform für ein Sanierungskonzept zeigt die Figur 13. In diesem Ausführungsbeispiel werden beidseitig der Bohle 11 redundant lange Folienstücke 13a und 13b bereitgestellt. Zunächst wird das freie Ende 130a des ersten Folienstücks 30a über die Oberfläche 11a der Bohle 11 geführt. Anschließend wird das freie Ende 130b des zweiten Folienstücks über die Oberfläche 11a und das freie Ende 130a des ersten Folienstücks 13a geführt. Auf der anderen Seite der Bohle 11 werden das erste Folienstück 13a, das zweite Folienstück 13b und evtl. auch die bisherige Dachfolie 21 mittels einer Schweißnaht miteinander verschweißt.

Auf diese Weise ist die Bohle 11 sicher eingeschlossen. Darüber hinaus ist die bisherige Dachfolie 21 vollständig abgedeckt, d. h. eine neue Dachfolie, die sich aus Folienstücken 13a, 13b, ... zusammensetzt, wird bereitgestellt.

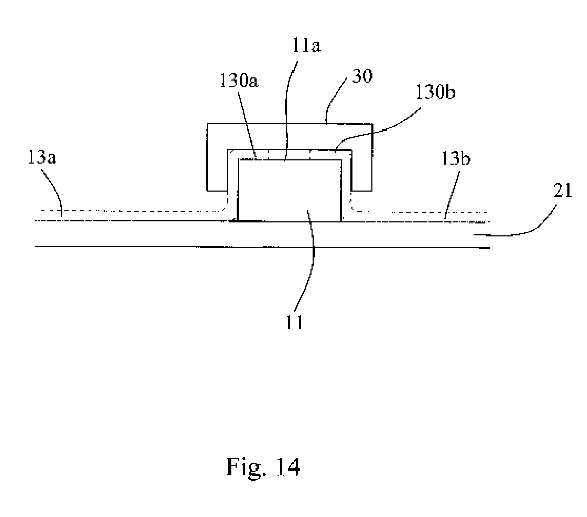

Ein weiteres Konzept zur Dachsanierung ist in der Figur 14 dargestellt. Die Figur 14 zeigt ein Konzept, bei dem zunächst eine Dachfolie 13 (nicht dargestellt) in der Größe der bisherigen Dachfolie 21 bereitgestellt wird. Die Dachfolie wird d im Bereich der Bohlen 11 in Längsrichtung L (senkrecht zur Blattebene) getrennt. Die freien Enden 130a und 130b, die wenigstens über einen Teil der Oberfläche 11a der Bohle 11 gelegt sind, werden mittels eines Klemmprofils 30 in ihrer Position gehalten.

Auf diese Weise entsteht zwischen den Bohlen eine vollständig neue Dachabdeckung. Im Bereich der Bohlen 11 wird die Lücke zwischen den Enden 130a bzw. 130b der Folienstücke 13a, 13b, ... mit Hilfe der Bohle selbst bzw. mit Hilfe des Klemmprofils 30 überbrückt.

Alternativ dazu könnten, sofern auf das Klemmprofil 30 verzichtet werden soll, die Enden 130a und 130b der Folienstücke 13a, 13b auch auf andere Weise, beispielsweise durch Verschweißen, Verkleben, etc., in jeden Fall aber möglichst durch eine wasserdichte Verbindung, an der Seitenfläche oder auf der Oberfläche 11a der Bohle 11 befestigt werden.

In sämtlichen der genannten Sanierungsverfahren für Flachdächer im Zusammenhang mit der Montage von Solarmodulen soll es selbstverständlich möglich sein, die neue Dachfolie 13 an beliebigen Stellen mit überlappenden Bereichen oder mit der bisherigen Dachfolie 21 zu verbinden, beispielsweise durch maschinelles Verschweißen.

Für die beschriebenen Merkmale soll sowohl einzeln als auch in Kombination mit allen anderen beschriebenen Merkmalen Schutz beansprucht werden, soweit die Merkmale für den Fachmann offensichtlich sinnvoll kombiniert werden können. So sollen Merkmale aus einzelnen beschriebenen Ausführungsformen ohne weiteres kombiniert werden können.

## Patentansprüche

1. Verfahren zur Sanierung eines Flachdachs im Rahmen der Montage von Solarmodulen (30) mittels eines Montagesystems (10) umfassend folgende Schritte:
a) Befestigen wenigstens eines Trägerelements (11) auf der Dachabdeckung (21) eines Flachdachs;
b) Anordnen eines Systemdichtelements (13) auf der Dachabdeckung (21) und über dem wenigstens einen Trägerelement (11) derart, dass wenigstens ein Abschnitt des Trägerelements (11) abgedeckt ist; und
c) Befestigen des Systemdichtelements (13) am Dach.

2. Verfahren nach Anspruch 1, **dadurch gekennzeichnet, dass** im Verfahrensschritt a) eine Vielzahl von Trägerelementen (11) befestigt wird, die im Verfahrensschritt b) vom Systemdichtelement abgedeckt werden.

3. Verfahren nach Anspruch 1 oder 2, **dadurch gekennzeichnet, dass** das bzw. die Trägerelemente (11) im Verfahrensschritt a) auf der Dachabdeckung (21) mittels Befestigungselementen (12) befestigt werden, wobei die Befestigungselemente (12) eine Verbindung zur Unterkonstruktion des Dachs herstellen.

4. Verfahren nach einem der vorhergehenden Ansprüche, **dadurch gekennzeichnet, dass** das Systemdichtelement (13) im Verfahrensschritt c) mit der Dachabdeckung (21) verbunden, insbesondere verschweißt oder verklebt wird.

5. Verfahren nach einem der vorhergehenden Ansprüche, **dadurch gekennzeichnet, dass** das Systemdichtelement (13) als eine zusätzliche Dachfolie bereitgestellt wird.

6. Verfahren nach einem der vorhergehenden Ansprüche, **dadurch gekennzeichnet, dass** eines oder mehrere Systemdichtelemente (13) die gesamte Oberfläche der Dachfolie (21) wasserdicht abdecken.

7. Verfahren nach einem der vorhergehenden Ansprüche, **dadurch gekennzeichnet, dass** das Verfahren wenigstens einen weiteren Verfahrensschritt umfasst:
d) Befestigung wenigstens eines Halteelements (14) am vom Systemdichtelement (13) abgedeckten Trägerelement (11).

8. Verfahren nach einem der vorhergehenden Ansprüche, **dadurch gekennzeichnet, dass** das Verfahren wenigstens einen weiteren Verfahrensschritt umfasst:
e) Befestigung wenigstens eines Solarmoduls (30) am vom Systemdichtelement (13) abgedeckten Trägerelement (11) und/oder am Halteelement (14).

9. Verfahren nach einem der vorhergehenden Ansprüche, **dadurch gekennzeichnet, dass** im Verfahrensschritt b) wenigstens ein Längsabschnitt des Trägerelements (11) vollständig abgedeckt wird.

10. Verfahren nach einem der vorhergehenden Ansprüche, **dadurch gekennzeichnet, dass** bei Verwendung von zwei oder mehreren benachbart angeordneten Systemdichtelementen (13) die benachbarten Enden aneinandergrenzende Systemdichtelemente (13) jeweils in einen oberhalb der wasserführenden Ebene der Dachabdeckung (21) liegenden Bereich geführt sind.

11. Verfahren nach einem der vorhergehenden Ansprüche, **dadurch gekennzeichnet, dass** bei Verwendung von zwei oder mehreren benachbart angeordneten Systemdichtelementen (13) die benachbarten Enden aneinandergrenzende Systemdichtelemente (13) jeweils in einem oberhalb der wasserführenden Ebene der Dachabdeckung (21) liegenden Bereich eine Trägerelements (11) liegen.

12. Verfahren nach einem der vorhergehenden Ansprüche 10 oder 11, **dadurch gekennzeichnet, dass**
die Randbereiche aneinandergrenzender Systemdichtelemente (13) miteinander verbunden sind, insbesondere an einer Oberseite des Trägerelements (11).

13. Verfahren zur Sanierung eines Flachdachs im Rahmen der Montage von Solarmodulen (30) mittels eines Montagesystems (10) umfassend folgende Schritte:
a) Bestimmung der gewünschten Anordnung von Trägerelementen (11) auf einer sanierungsbedürftigen Dachabdeckung (21) und Anordnung der Trägerelemente (11) auf der Dachabdeckung (21); und
b) Anordnen wenigstens eines Systemdichtelements (13) auf der Dachabdeckung (21) zum Abdecken wenigstens eines Teilbereichs der Dachabdeckung (21),
**dadurch gekennzeichnet, dass**
der wenigstens eine abgedeckte Teilbereich einen Zwischenbereich zwischen den gewünschten Positionen wenigstens zweier Trägerelemente (11) umfasst.

14. Verfahren nach Anspruch 13 , **dadurch gekennzeichnet, dass** sich die Endbereiche (130a, 130b) zweier beidseitig eines bestimmten Trägerelements (11) angeordneter Systemdichtelemente (13a, 13b) überlappen.

15. Flachdachkonstruktion mit einer daran befestigten Solarmodulanordnung, umfassend:
a) ein Flachdach mit einer daran angeordneten ersten Dachfolie (21);
b) wenigstens ein auf der ersten Dachfolie (21) angeordnetes und mit dem Flachdach verbundenes Trägerelement (11); und
c) eine mit dem Flachdach verbundene zweite Dachfolie (13), die oberhalb der ersten Dachfolie (21) und oberhalb des Trägerelements (11) angeordnet ist.
